# EUROPEAN PATENT APPLICATION

(11) **EP 4 752 683 A1**
(43) Date of publication of application: **03.06.2026**
(21) Application number: 24849481.7
(22) Date of filing: 25.07.2024
(51) Int. Cl.: G06F 3/01, G06T 19/00, G10L 15/26, G06F 40/20, G06F 3/0484, G06F 3/16, G06F 3/041, G06F 3/04883

(54) **ELECTRONIC DEVICE FOR GENERATING VIRTUAL OBJECT AND OPERATION METHOD THEREOF**

(30) Priority: 28.07.2023 KR 20230098944
(71) Applicant: Samsung Electronics Co., Ltd., Suwon-si, Gyeonggi-do 16677 (KR)
(72) Inventor: JI, Seowon, Suwon-si, Gyeonggi-do 16677 (KR); SHIN, Seunghak, Suwon-si, Gyeonggi-do 16677 (KR); JEONG, Jaeyun, Suwon-si, Gyeonggi-do 16677 (KR); YEO, Yoonjae, Suwon-si, Gyeonggi-do 16677 (KR); WON, Seungjae, Suwon-si, Gyeonggi-do 16677 (KR); JANG, Jaehyun, Suwon-si, Gyeonggi-do 16677 (KR)
(74) Representative: Appleyard Lees IP LLP
(86) International application number: PCT/KR2024/010816
(87) International publication number: WO 2025/028912

(57) **Abstract**

An electronic device may include: a display; a camera configured to obtain an image; a memory storing at least one instruction; and at least one processor configured to execute the at least one instruction to: obtain spatial information about a real-world space based on the image obtained through the camera; obtain user inputs based on the image obtained through the camera; obtain object characteristic information from the user inputs; obtain object generation information for generating a virtual object, based on the spatial information and the object characteristic information; generate the virtual object for the object generation information by inputting the object generation information to a generative artificial intelligence (AI) model trained to generate a three-dimensional (3D) virtual object based on information about a space and an object; and control the display to display the virtual object.

## Description

### Technical Field

The disclosure relates to an electronic device and operation method thereof for generating a three-dimensional (3D) virtual object in a real-world space. More particularly, the disclosure provides an electronic device and operation method thereof for generating a 3D virtual object by using multi-modality information and providing the generated 3D virtual object.

### Background Art

Augmented reality (AR) is a technology that overlays virtual objects on a physical environment space or real-world objects in the real world and shows them together, and has the advantage of combining virtual objects and virtual information into a real-world space. AR devices using AR technology (for example, smart glasses) have become useful in everyday life, such as information search, route guidance, and camera photography. In particular, smart glasses are also being worn as fashion items and mainly used for outdoor activities.

AR technology that is currently being used and distributed is capable of placing and displaying virtual objects in a real-world space, but the arrangement of the virtual objects is limited to arrangement of pre-modeled three-dimensional (3D) virtual objects. For example, 3D object modeling technology is a technology for generating 3D virtual objects by using depth information, pose information, and texture information, but the technology has a technical limitation in that it is not capable of generating objects that do not exist in reality. As another example, a modeling method using a deep neural network model (deep learning) is a method of generating 3D virtual objects by performing object modeling by optimizing two-dimensional (2D) images and location data of objects of which images are captured at various locations by using a trained deep neural network model, and also has a limitation in that the modeling method cannot be used when generating an object that does not exist in reality. Furthermore, currently available and distributed virtual object generation technologies are not capable of modifying the generated 3D virtual objects.

As described above, the current AR technology is not capable of generating virtual objects having shapes that do not exist in reality, and does not allow users to modify generated virtual objects, thereby providing only a limited AR experience, which may hinder expansion of AR services.

### Disclosure of Invention

### Solution to Problem

According to one or more example embodiments, an electronic device may include: a display; a camera configured to obtain an image; a memory storing at least one instruction; and at least one processor configured to execute the at least one instruction to: obtain spatial information about a real-world space based on the image obtained through the camera; obtain user inputs based on the image obtained through the camera; obtain object characteristic information from the user inputs; obtain object generation information for generating a virtual object, based on the spatial information and the object characteristic information; generate the virtual object for the object generation information by inputting the object generation information to a generative artificial intelligence (AI) model trained to generate a three-dimensional (3D) virtual object based on information about a space and an object; and control the display to display the virtual object.

According to one or more example embodiments, a method, performed by an electronic device, of generating a virtual object, may include: obtaining an image through a camera; obtaining user inputs based on the image obtained via through the camera; obtaining spatial information about a real-world space based on the image; obtaining object characteristic information from the user inputs; obtaining object generation information for generating the virtual object, based on the spatial information and the object characteristic information; generating the virtual object for the object generation information by inputting the object generation information to a generative artificial intelligence (AI) model trained to generate a three-dimensional (3D) virtual object based on information about a space and an object; and displaying, with a display, the virtual object.

According to one or more example embodiments, a computer program product may include a computer-readable storage medium, wherein the computer-readable storage medium comprises instructions that are readable by an electronic device to: obtain an image through a camera; obtain user inputs based on the image obtained through the camera; obtain spatial information about a real-world space based on the image; obtain object characteristic information from the user inputs; obtain object generation information for generating a virtual object, based on the spatial information and the object characteristic information; generate the virtual object for the object generation information by inputting the object generation information to a generative artificial intelligence (AI) model trained to generate a three-dimensional (3D) virtual object based on information about a space and an object; and display, with a display, the virtual object.

According to one or more example embodiments, a head-mounted display (HMD) may include: a display; a camera configured to obtain an image; a memory storing at least one instruction; and at least one processor configured to execute the at least one instruction to: obtain spatial information about a real-world space based on the image obtained through the camera; obtain user inputs based on the image obtained through the camera; obtain object characteristic information based on the user inputs, the object characteristic information describing an object that is to occupy the real-world space; obtain object generation information for generating a virtual object corresponding to the object that is to occupy the real-world space, based on the spatial information and the object characteristic information; generate the virtual object for the object generation information by inputting the object generation information to a generative artificial intelligence (AI) model; and control the display to display the virtual object in the real-world space.

### Brief Description of Drawings

Embodiments will be more clearly understood from the following detailed description taken in conjunction with the accompanying drawings in which:
FIG. 1 is a conceptual diagram illustrating an operation in which an electronic device generates a three-dimensional (3D) virtual object based on multi-modality information and displays the generated 3D virtual object, according to one or more embodiments of the disclosure;
FIG. 2 is a flowchart of an operation method of an electronic device, according to one or more embodiments of the disclosure;
FIG. 3 is a block diagram illustrating components of an electronic device according to one or more embodiments of the disclosure;
FIG. 4 is a diagram illustrating data input and output performed in an electronic device between a software module stored in a memory and each of a camera, a microphone, and a display, according to one or more embodiments of the disclosure;
FIG. 5 is a flowchart of a method, performed by an electronic device, of obtaining a vector representing object generation information, according to one or more embodiments of the disclosure;
FIG. 6 is a diagram illustrating an operation in which an electronic device obtains feature data representing object generation information by embedding multi-modality information, according to one or more embodiments of the disclosure;
FIG. 7 is a diagram illustrating an operation in which an electronic device assigns random values to missing vector values in feature data representing object generation information, according to one or more embodiments of the disclosure;
FIG. 8 is a flowchart illustrating a method, performed by an electronic device, of generating a 3D virtual object by modifying object generation information based on a user input, according to one or more embodiments of the disclosure;
FIG. 9 is a diagram illustrating components of an electronic device for generating a 3D virtual object by modifying object generation information, according to one or more embodiments of the disclosure;
FIG. 10 is a diagram illustrating an operation in which an electronic device modifies object generation information by receiving a user input for adjusting a weight of multi-modality information, according to one or more embodiments of the disclosure;
FIG. 11 is a diagram illustrating an operation in which an electronic device modifies object generation information by receiving a user input for modifying a shape, size, and location of an object, according to one or more embodiments of the disclosure;
FIG. 12A is a diagram illustrating an operation in which an electronic device generates a 3D virtual object based on multi-modality information and displays the generated 3D virtual object, according to one or more embodiments of the disclosure;
FIG. 12B is a diagram illustrating an operation in which an electronic device generates a 3D virtual object based on multi-modality information and displays the generated 3D virtual object, according to one or more embodiments of the disclosure.
FIG. 12C is a diagram illustrating an operation in which an electronic device generates a 3D virtual object based on multi-modality information and displays the generated 3D virtual object, according to one or more embodiments of the disclosure;
FIG. 12D is a diagram illustrating an operation in which an electronic device generates a 3D virtual object based on multi-modality information and displays the generated 3D virtual object, according to one or more embodiments of the disclosure; and
FIG. 12E is a diagram illustrating an operation in which an electronic device generates a 3D virtual object based on multi-modality information and displays the generated 3D virtual object, according to one or more embodiments of the disclosure.

### Mode for the Invention

As the terms used herein, general terms that are currently widely used are selected by taking functions in the disclosure into account, but the terms may be changed according to an intention of one of ordinary skill in the art, precedent cases, advent of new technologies, etc. Furthermore, specific terms may be arbitrarily selected by the applicant, and in this case, the meaning of the selected terms will be described in detail in the detailed description of a corresponding embodiment of the disclosure. Thus, the terms used herein should be defined not by simple appellations thereof but based on the meaning of the terms together with the overall description of the disclosure.

Singular expressions used herein are intended to include plural expressions as well unless the context clearly indicates otherwise. All the terms used herein, which include technical or scientific terms, may have the same meaning that is generally understood by a person of ordinary skill in the art of the disclosure.

Throughout the disclosure, when a part "includes" or "comprises" an element, unless there is a particular description contrary thereto, the part may further include other elements, not excluding the other elements. Furthermore, terms, such as "portion," "module," etc., used herein indicate a unit for processing at least one function or operation, and may be implemented as hardware or software or a combination of hardware and software.

The expression "configured to (or set to)" used herein may be used interchangeably, according to context, with, for example, the expression "suitable for," "having the capacity to," "designed to," "adapted to," "made to," or "capable of". The term "configured to (or set to)" may not necessarily mean only "specifically designed to" in terms of hardware. Instead, the expression "a system configured to" may mean, in some contexts, the system being "capable of", together with other devices or components. For example, the expression "a processor configured to (or set to) perform A, B, and C" may mean a dedicated processor (e.g., an embedded processor) for performing the corresponding operations, or a general-purpose processor (e.g., a central processing unit (CPU) or an application processor (AP)) capable of performing the corresponding operations by executing one or more software programs stored in a memory.

Furthermore, it should be understood that when a component is referred to herein as being "connected" or "coupled" to another component, the component may be directly connected or coupled to the other component, but may also be connected or coupled to the other component via another intervening component therebetween unless there is a particular description contrary thereto.

In the disclosure, an 'electronic device' may be a mobile device, a smartphone, or a tablet personal computer (PC). However, the electronic device is not limited thereto, and may be implemented as a variety of electronic devices, such as a laptop computer, a desktop, an e-book terminal, a digital broadcast terminal, a personal digital assistant (PDA), a portable multimedia player (PMP), a navigation device, an MP3 player, a camcorder, an Internet Protocol television (IPTV), a digital television (DTV), a wearable device, etc.

In one or more embodiments of the disclosure, the electronic device may be an augmented reality (AR) device. An 'AR device' is a device capable of realizing AR, and for example, may be implemented as AR glasses worn on a user's face. However, the AR device is not limited thereto, and may be implemented as a head mounted display (HMD) apparatus, an AR helmet, or the like worn over the user's head.

As used herein, 'AR' refers to a technology for showing virtual images in a real-world physical environment space, or showing real-world objects and virtual images together.

As used herein, a 'real-world space' refers to a space in the real world that a user sees through an AR device. In one or more embodiments of the disclosure, the real- world space may mean an indoor space. Real-world objects may be placed within the real-world space.

Furthermore, a 'virtual object' is an image generated via an optical engine and may include both a static image and a dynamic image. Such a virtual object is observed together with a real-world scene, and may be an image representing information about a real-world object in the real-world scene, information about an operation of an AR device, a control menu, or the like. In one or more embodiments of the disclosure, a 'virtual object' may include a user interface (UI) provided via an application or program executed by an AR device.

As used herein, a "three-dimensional (3D) virtual object" refers to a virtual object implemented as a 3D solid object.

Functions related to artificial intelligence (AI) according to the disclosure are performed via a processor and a memory. The processor may be configured as one or more processors. In this case, the one or more processors may be a general-purpose processor such as a CPU, an AP, a digital signal processor (DSP), etc., a dedicated graphics processor such as a graphics processing unit (GPU), a vision processing unit (VPU), etc., or a dedicated Al processor such as a neural processing unit (NPU). The one or more processors control input data to be processed according to predefined operation rules or Al model stored in the memory. Alternatively, when the one or more processors are a dedicated Al processor, the dedicated Al processor may be designed with a hardware structure specialized for processing a particular Al model.

The predefined operation rules or Al model are created via a training process. In this case, the creation via the training process means that the predefined operation rules or Al model set to perform desired characteristics (or purposes) are created by training a basic Al model based on a large number of training data via a learning algorithm. The training process may be performed by an apparatus itself on which Al according to the disclosure is performed, or via a separate server and/or system. Examples of a learning algorithm may include, but are not limited to, supervised learning, unsupervised learning, semi-supervised learning, and reinforcement learning.

In the disclosure, an 'AI model' may consist of a plurality of neural network layers. Each of the plurality of neural network layers has a plurality of weight values and may perform neural network computations via calculations between a result of computations in a previous layer and the plurality of weight values. A plurality of weight values assigned to each of the plurality of neural network layers may be optimized by a result of training the Al model. For example, the plurality of weight values may be updated to reduce or minimize a loss or cost value obtained in the Al model during a training process. An artificial neural network may include a deep neural network (DNN), and may be, for example, a convolutional neural network (CNN), a recurrent neural network (RNN), a restricted Boltzmann machine (RBM), a deep belief network (DBN), a bidirectional recurrent DNN (BRDNN), or deep Q-networks (DQNs) but is not limited thereto.

As used herein, 'vision recognition' refers to image signal processing that involves inputting an image to an Al model and performing inference using the Al model to detect an object in the input image, classify the object into a particular category, or segment the object. In one or more embodiments of the disclosure, vision recognition may refer to image processing that involves recognizing an object from an image, which has been captured through a camera, by using an Al model to obtain classification information or type information of the object.

One or more embodiments of the disclosure will now be described more fully hereinafter with reference to the accompanying drawings so that the embodiment of the disclosure be easily implemented by one of ordinary skill in the art. However, the disclosure may be implemented in different forms and should not be construed as being limited to one or more embodiments of the disclosure set forth herein.

Hereinafter, the disclosure is described in detail with reference to the accompanying drawings.

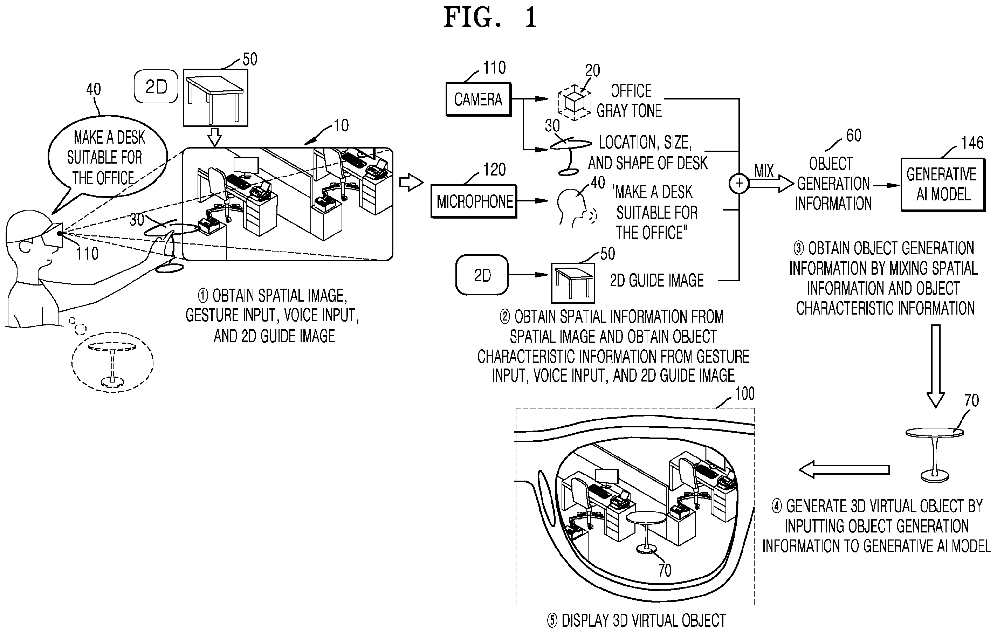

FIG. 1 is a conceptual diagram illustrating an operation in which an electronic device 100 generates a 3D virtual object 70 based on multi-modality inputs and display the generated 3D virtual object, according to one or more embodiments of the disclosure.

Referring to FIG. 1, the electronic device 100 may be glasses-shaped AR glasses worn on a user's face. However, the electronic device 100 is not limited thereto, and in one or more embodiments of the disclosure, the electronic device 100 may be implemented as various electronic devices such as a mobile device, a smartphone, a laptop computer, a desktop, a tablet PC, an e-book terminal, a digital broadcasting terminal, a PDA, a PMP, a navigation device, an MP3 player, a camcorder, an IPTV, a DTV, and wearable devices, etc.

The electronic device 100 may include a camera 110. Referring to FIG. 1, the electronic device 100 may obtain a spatial image 20 by capturing an image of a real-world space 10 by using the camera 110, receive a gesture input 30 and a voice input 40 from the user, and obtain a two-dimensional (2D) guide image 50 (operation ①).

The electronic device 100 may obtain spatial information from the spatial image 20 and pieces of object characteristic information from the gesture input 30, the voice input 40, and 2D guide image 50 (operation ② ).

The electronic device 100 may obtain object generation information 60 by mixing together the obtained spatial information and pieces of object characteristic information (operation ③).

The electronic device 100 may generate the 3D virtual object 70 by inputting the object generation information 60 to a generative Al model 146 and performing inferencing thereon (operation ④).

The electronic device 100 may display the generated 3D virtual object 70 (operation ⑤).

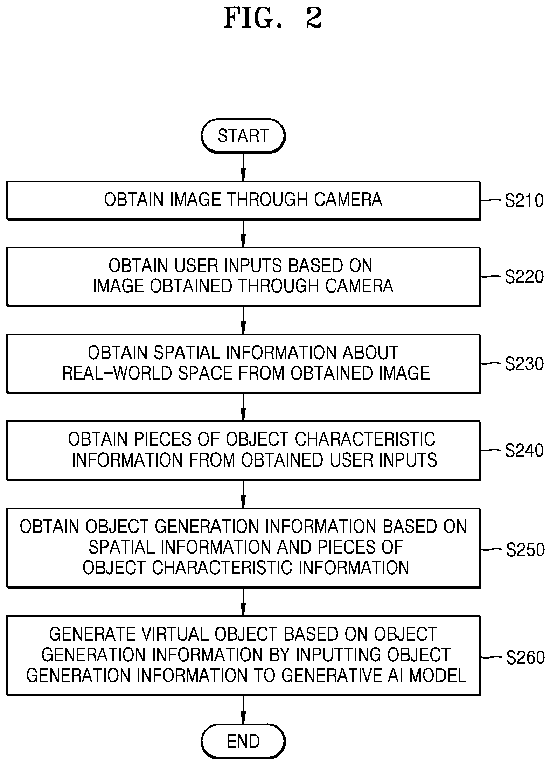

Hereinafter, functions and/or operations of the electronic device 100 are described in detail with reference to FIGS. 1 and 2 together.

FIG. 2 is a flowchart of an operation method of the electronic device 100, according to one or more embodiments of the disclosure.

In operation S210, the electronic device 100 obtains an image through a camera. Referring to FIG. 1 in conjunction with FIG. 2, the electronic device 100 may obtain the spatial image 20 by capturing an image of the real-world space 10 by using the camera 110.

In operation S220, the electronic device 100 obtains user inputs based on the image obtained through the camera 110. In one or more embodiments of the disclosure, the electronic device 100 may obtain a hand image by capturing an image of a user's hand by using the camera 110, recognize the user's hand from the hand image, and recognize a gesture performed by the recognized user's hand. However, the disclosure is not limited thereto, and the electronic device 100 may be implemented as a mobile device, a smartphone, or a tablet PC including a touch screen. In this case, the electronic device 100 may recognize a gesture input from a user's touch input received through the touch screen. In the embodiment of the disclosure shown in FIG. 1, the electronic device 100 may recognize the gesture input 30 from the user drawing a desk shape.

In one or more embodiments of the disclosure, the electronic device 100 may include a microphone 120 and receive the voice input 40 from the user via the microphone 120. In the embodiment of the disclosure shown in FIG. 1, the electronic device 100 may receive the voice input 40 "Make a desk suitable for the office."

In one or more embodiments of the disclosure, the electronic device 100 may obtain a 2D guide image 50. As used herein, the '2D guide image 50' refers to a 2D image that includes guide information regarding at least one of a type, shape, or theme of an object for generating the 3D virtual object 70. In the embodiment of the disclosure shown in FIG. 1, the 2D guide image 50 may be a 2D image showing a desk having iron legs and a wooden top. In one or more embodiments of the disclosure, the electronic device 100 may receive the 2D guide image 50 from an external server or storage device. However, the disclosure is not limited thereto, and the electronic device 100 may obtain the 2D guide image 50 input via a user input.

In operation S230, the electronic device 100 obtains spatial information about a real-world space from the obtained image. In the disclosure, 'spatial information' is information about a real-world space and may include, for example, information about a type, a category, or an atmosphere of the real-world space. Referring to FIG. 1 in conjunction with FIG. 2, the electronic device 100 may obtain spatial information about the real-world space 10 from the spatial image 20. In one or more embodiments of the disclosure, the electronic device 100 may perform vision recognition using an Al model to recognize a type of the real-world space 10 from the spatial image 20, classify the real-world space 10 into a category, and recognize an object within the real-world space 10. For example, the Al model may be a DNN model trained to obtain spatial information, such as a type, category, or atmosphere of a space from the spatial image 20 via a supervised learning approach that applies a plurality of images of the space as an input and applies label values related to the type, category, or atmosphere of the space as ground truth. In the embodiment of the disclosure shown in FIG. 1, the electronic device 100 may obtain, from the spatial image 20, information about the type or category of the space, such as 'office,' and information about the atmosphere or theme of the space, such as 'gray tone'.

In operation S240, the electronic device 100 obtains pieces of object characteristic information from the obtained user inputs. As used herein, 'object characteristic information' refers to information used to generate the 3D virtual object 70 according to the user's intent, and may include, for example, information about a shape, location, size, type, category, color, or theme of the object. In other words, the object characteristic information may describe an object that is to occupy the real-world space.

The electronic device 100 may obtain object characteristic information according to the user's intent from the user's gesture input 30 recognized from the image obtained through the camera 110. In one or more embodiments of the disclosure, the electronic device 100 may recognize a user's gesture by recognizing, from the image, an area where the user's hand is pointing and a trajectory of the area. The electronic device 100 may extract the object characteristic information including at least one of a location, a size, or a shape of the object from the recognized gesture input 30. In the embodiment of the disclosure shown in FIG. 1, the electronic device 100 may extract the object characteristic information including at least one of a location, a size, or a shape of the desk from the gesture input 30.

The electronic device 100 may convert the voice input 40 received through the microphone 120 into a speech signal and perform automatic speech recognition (ASR) to convert the speech signal into text. The electronic device 100 may analyze the text by using a natural language understanding (NLU) model and identify a user's intent and named entities based on an analysis result. The electronic device 100 may obtain, based on the analysis result for the text, the object characteristic information including at least one of a type, a shape, a color, or a theme of the object according to the user's intent and named entities. In the embodiment of the disclosure shown in FIG. 1, the electronic device 100 may obtain, from the voice input 40, an intent of 'object generation' and information about named entities such as 'desk,' 'office,' etc.

The electronic device 100 may obtain object characteristic information from the 2D guide image 50. In one or more embodiments of the disclosure, the electronic device 100 may extract, from the 2D guide image 50, object characteristic information including at least one of a type, a shape, a color, or a theme of the object. In the embodiment of the disclosure shown in FIG. 1, the electronic device 100 may extract, from the 2D guide image 50, object characteristic information regarding a type of the object, such as 'desk,' a shape of the desk including a wooden top and iron legs, colors including brown and black, etc.

In operation S250, the electronic device 100 obtains object generation information, based on the spatial information and the pieces of object characteristic information. Referring to FIG. 1 in conjunction with FIG. 2, the electronic device 100 may obtain the object generation information 60 by mixing together the spatial information including at least one of the type, category, or theme of the real-world space 10, which is obtained from the spatial image 20, the object characteristic information including at least one of the location, size, or shape of the object, which is obtained from the gesture input 30, the object characteristic information including at least one of the type, shape, color, or theme of the object obtained from the voice input 40, and the object characteristic information including at least one of the type, shape, color, or theme of the object, which is obtained from the 2D guide image 50. In one or more embodiments of the disclosure, the electronic device 100 may convert the spatial information and the pieces of object characteristic information into pieces of feature data by performing vector embeddings on the spatial information and the pieces of object characteristic information, respectively, and obtain feature data representing the object generation information 60 by mixing the pieces of feature data together. 'Feature data' may be composed of a tensor including an n-dimensional vector with one or more dimensions, a matrix, or a feature vector. In one or more embodiments of the disclosure, the electronic device 100 may convert spatial information and the pieces of object characteristic information to convert them into feature vectors by perform vector embeddings on the spatial information and the pieces of object characteristic information, respectively, and obtain a feature vector representing the object generation information 60 by mixing the feature vectors together using a multilayer perceptron (MLP) technique. However, the disclosure is not limited thereto, and in one or more embodiments of the disclosure, the electronic device 100 may obtain feature data representing the object generation information 60 by inputting pieces of feature data to a CNN or an RNN.

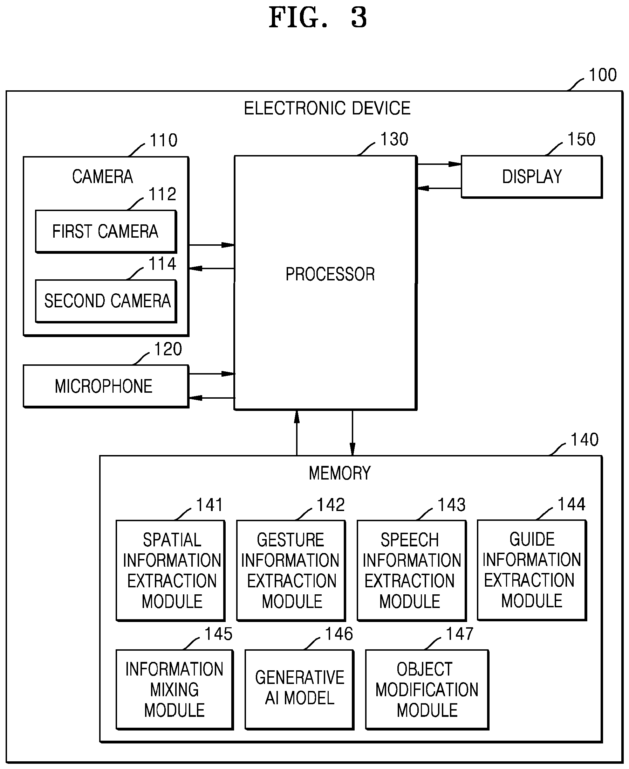

In operation S260, the electronic device 100 may generate a 3D virtual object based on the object generation information by inputting the object generation information to a generative Al model. As used herein, the 'generative Al model' (146 of FIGS. 1 and 3) is an Al model trained to generate a 3D virtual object based on spatial information and object information. In one or more embodiments of the disclosure, the generative Al model 146 may be implemented as a generative adversarial network (GAN) or a diffusion model based on multi-modality. A diffusion model based on multi-modality may be implemented, for example, as Stable Diffusion or SDFusion. However, the generative Al model 146 is not limited thereto, and may include any known Al model in the art trained to generate a 3D virtual object based on spatial information and object information.

Referring to FIG. 1 in conjunction with FIG. 2, the electronic device 100 may input the object generation information 60 to the generative Al model 146, and generate a 3D virtual object 70 for the object generation information 60 by performing inferencing using the generative Al model 146. In the embodiment of the disclosure shown in FIG. 1, the electronic device 100 may generate the 3D virtual object 70, which is a virtual image representing a 3D shape of the desk, via the generative Al model 146.

In operation ⑤ of FIG. 1, the electronic device 100 may display the generated 3D virtual object 70. In one or more embodiments of the disclosure, the electronic device 100 may be composed of AR glasses, and the AR glasses may be composed of a lens optical system, and include a display (150 of FIG. 3) including a waveguide and an optical engine. In the embodiment of the disclosure shown in FIG. 1, the electronic device 100 may generate light of a virtual image constituting the 3D virtual object 70 by using the optical engine, and project the light onto the waveguide to display the 3D virtual object 70 on the real-world space 10. However, the disclosure is not limited thereto, and in one or more embodiments of the disclosure, when the electronic device 100 is implemented as a mobile device such as a smartphone or tablet PC, the electronic device 100 may display the 3D virtual object 70 on a liquid crystal display (LCD), a thin film transistor LCD (TFT-LCD), an organic light-emitting diode (OLED) display, a flexible display, a 3D display, an electrophoretic display, or the like.

AR technology that is currently being used and distributed is capable of placing and displaying virtual objects in the real-world space, but the arrangement of virtual objects is at the level of arranging already modeled 3D virtual objects. That is, the current AR technology is not capable of generating a 3D virtual object having a shape that does not exist in reality, and does not allow the user to modify a generated 3D virtual object, thereby providing only a limited AR experience. Therefore, expansion of AR services may be hindered, and the degree of utilization may be lowered.

The disclosure provides the electronic device 100 and operation method thereof for generating a 3D virtual object based on multi-modality information including at least one of a spatial image related to a real-world space, a gesture input received from the user, a voice input, or a 2D guide image, and providing the generated 3D virtual object.

The electronic device 100 of the disclosure may generate the 3D virtual object 70 by using information from multiple modalities, i.e., spatial information obtained from the spatial image 20 and pieces of object characteristic information obtained from the gesture input 30, the voice input 40, and the 2D guide image 50, thereby quickly generating and providing a 3D model of a virtual object desired by the user. By doing so, the electronic device 100 of the disclosure provides a technical effect of enabling an active AR experience for the user. In addition, the electronic device 100 of the disclosure generates the 3D virtual object 70 by using multi-modality input information in accordance with an AR service environment that supports multiple input modalities, thereby providing a user with a convenient and highly usable AR experience.

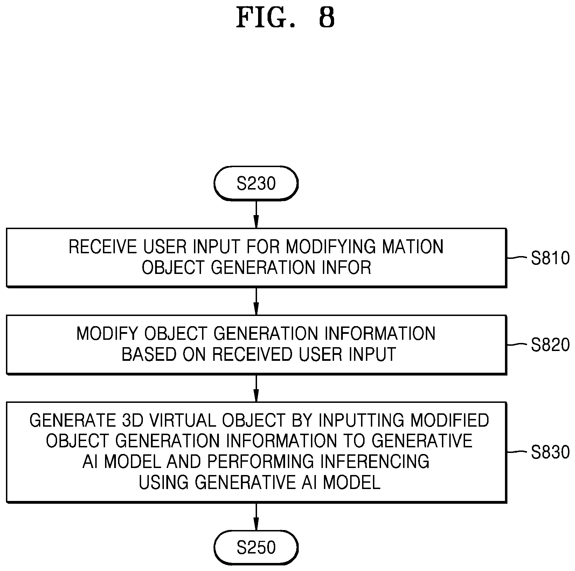

One or more embodiments of the disclosure in which the electronic device 100 modifies the 3D virtual object 70 based on a user input is described in detail below with reference to FIGS. 8 to 11.

FIG. 3 is a block diagram illustrating components of an electronic device 100 according to one or more embodiments of the disclosure.

Referring to FIG. 3, the electronic device 100 may include a camera 110, a microphone 120, a processor 130, a memory 140, and a display 150. The camera 110, the microphone 120, the processor 130, the memory 140, and the display 150 may be electrically and/or physically connected to each other. FIG. 3 illustrates only essential components for describing operations of the electronic device 100, and the components included in the electronic device 100 are not limited to those shown in FIG. 3. In one or more embodiments of the disclosure, the electronic device 100 may further include a communication interface for performing data communication with an external device or server. In one or more embodiments of the disclosure, the electronic device 100 may be implemented as a portable device, and in this case, the electronic device 100 may further include a battery for supplying driving power to the camera 110, the microphone 120, the processor 130, and the display 150.

The camera 110 is configured to obtain images of a real-world space and an object within the real-world space. The camera 110 may include a lens module, an image sensor, and an image processing module. The camera 110 may obtain a still image or video of an object through an image sensor (e.g., a complementary metal-oxide-semiconductor (CMOS) or charge-coupled device (CCD) sensor). The video may include a plurality of image frames consecutively obtained by capturing images of the object through the camera 110. The image processing module may encode still image data consisting of a single image frame or video data consisting of multiple image frames obtained through the image sensor, and transmit the encoded data to the processor 130. In one or more embodiments of the disclosure, the camera 110 may include a first camera 112 and a second camera 114.

The first camera 112 is configured to obtain a spatial image of the real-world space by capturing an image of the real-world space. In one or more embodiments of the disclosure, the first camera 112 may be configured as a camera including an image sensor, such as a red, green, and blue (RGB) camera or a grayscale camera. In one or more embodiments of the disclosure, the first camera 112 may be implemented in a small form factor so that it may be mounted on the electronic device 100 in a portable form, and may be implemented as a lightweight RGB camera that consumes low power.

The second camera 114 is configured to obtain a hand image by capturing an image of a user's hand. The second camera 114 may be configured as an RGB camera including an image sensor, but is not limited thereto. In one or more embodiments of the disclosure, the second camera 114 may be configured as a depth camera that obtains depth values of an object (e.g., the user's hand). When the second camera 114 is configured as the depth camera, the second camera 114 may be implemented as at least one of, for example, a time-of-flight (ToF) camera, a stereo vision camera, or a light detection and ranging (LiDAR) sensor, and obtain a depth map by measuring 3D depth values of joints included in the user's hand.

The microphone 120 may receive a voice input (e.g., the user's utterance) from the user and obtain a speech signal from the received voice input. The microphone 120 provides the obtained speech signal to the processor 130.

The processor 130 may execute one or more instructions of a program stored in the memory 140. The processor 130 may be composed of hardware components that perform arithmetic, logic, and input/output (I/O) operations, and image processing. In FIG. 3, the processor 130 is shown as a single element, but is not limited thereto. In one or more embodiments of the disclosure, the processor 130 may include one or a plurality of elements.

The processor 130 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The processor 130 may be a general-purpose processor such as a CPU, an AP, a DSP, etc., a dedicated graphics processor such as a GPU, a VPU, etc., or a dedicated Al processor such as an NPU. The processor 130 may control input data to be processed according to predefined operation rules or Al model. Alternatively, when the processor 130 is a dedicated Al processor, the dedicated Al processor may be designed with a hardware structure specialized for processing a particular Al model.

For example, the memory 140 may include at least one type of storage medium, i.e., at least one of a flash memory-type memory, a hard disk-type memory, a multimedia card micro-type memory, a card-type memory (e.g., a Secure Digital (SD) card or an eXtreme Digital (XD) memory), random access memory (RAM), static RAM (SRAM), read-only memory (ROM), electrically erasable programmable ROM (EEPROM), PROM, a magnetic memory, a magnetic disc, or an optical disc.

The memory 140 may store instructions related to functions and/or operations, performed by the electronic device 100, of obtaining spatial information from a spatial image and object characteristic information from a gesture input, a voice input, and a 2D guide image and providing an AR service by generating a 3D virtual object by using the spatial information and the object characteristic information. In one or more embodiments of the disclosure, the memory 140 may store at least one of instructions, algorithms, data structures, program code, or application programs readable by the processor 130. The instructions, algorithms, data structures, and program code stored in memory 140 may be implemented in programming or scripting languages such as C, C++, Java, assembler, etc.

The memory 140 may store instructions, algorithms, data structures, or program code related to the spatial information extraction module 141, the gesture information extraction module 142, the speech information extraction module 143, the guide information extraction module 144, the information mixing module 145, the generative Al model 146, and the object modification module 147. A 'module' included in the memory 140 refers to a unit for processing functions or operations performed by the processor 130, and may be implemented as software such as instructions, algorithms, data structures, or program code.

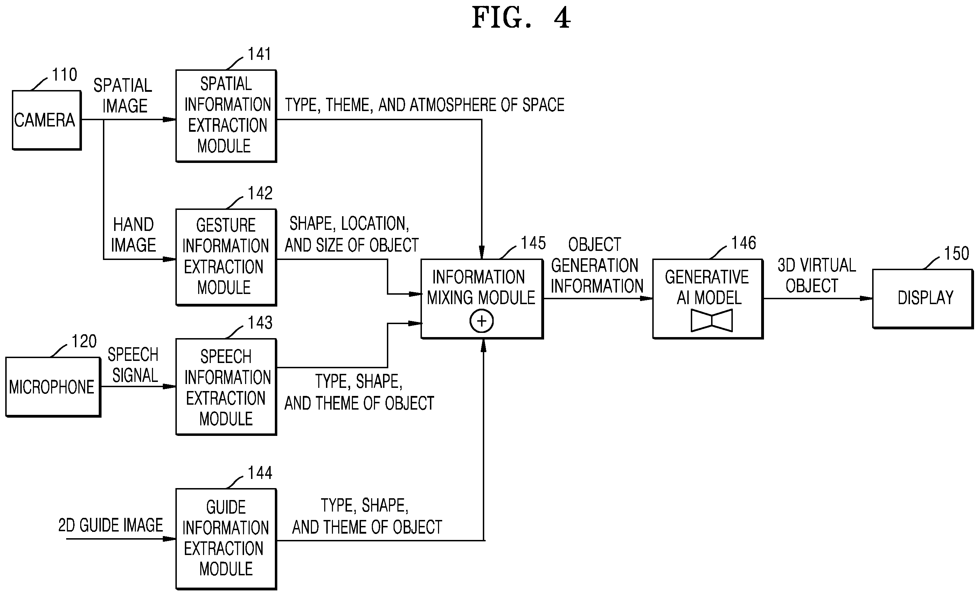

The processor 130 may be implemented by executing instructions or program code stored in the memory 140. Hereinafter, functions and/or operations performed by the processor 130 by executing instructions or program code of each of the plurality of modules stored in the memory 140 and data input/output between the plurality of modules and components (e.g., the camera 110, the microphone 120, and the display 150) are described in detail with reference to FIGS. 3 and 4 together.

FIG. 4 is a diagram illustrating data input and output performed in the electronic device 100 between a software module stored in the memory 140 and each of the camera 110, the microphone 120, and the display 150, according to one or more embodiments of the disclosure.

Referring to FIGS. 3 and 4 together, the spatial information extraction module 141 is composed of instructions or program code related to a function and/or an operation of extracting spatial information about a real-world space from a spatial image obtained through the first camera 112. In one or more embodiments of the disclosure, the 'spatial information' may include information about at least one of a type, a category, a color, a theme, or an atmosphere of the real-world space. The type or category of real-world space refers to classification information of the space obtained as a result of inferencing by an Al model, such as, office, café, school, library, playground, etc. The color, theme, or atmosphere of the real-world space is characteristic information based on the color or tone of the space, for example, information such as gray tone, brown tone, or green tone. In one or more embodiments of the disclosure, the spatial information extraction module 141 may include an Al model trained to recognize the type of the real-world space from the spatial image, classify the real-world space into a category, and recognize the color, theme, etc. For example, the Al model may be a DNN model trained to obtain spatial information, such as the type, category, or atmosphere of the space from the spatial image by using a supervised learning method that applies a plurality of images of the space as an input and applies label values related to the type, category, etc. of the space as ground truth. The DNN model may be, for example, a CNN model. However, the DNN model is not limited thereto, and may be implemented as any of the known DNN models including an RNN, an RBM, a DBN, a BRDNN, DQNs, etc.

The processor 130 may execute the instructions or program code of the spatial information extraction module 141 to extract information about at least one of a type, a category, a color, a theme, or an atmosphere of the real-world space from the spatial image obtained by the first camera 112. In one or more embodiments of the disclosure, the processor 130 may obtain spatial information from the spatial image by inputting the spatial image to a DNN model and performing inferencing thereon by using the DNN model.

The gesture information extraction module 142 is composed of instructions or program code related to functions and/or operations of recognizing a user's gesture input from a hand image and extracting object characteristic information from the gesture input. The processor 130 may execute the instructions or program code of the gesture information extraction module 142 to recognize an area where the user's hand is pointing and a trajectory of the area from a hand image obtained through the second camera 114, thereby recognizing the user's gesture input. However, the disclosure is not limited thereto, and the electronic device 100 may further include a touch screen. The touch screen receives a touch input from the user, and the processor 130 may recognize the user's gesture input from the touch input. The processor 130 may obtain, from the recognized gesture input, object characteristic information including at least one of a location, a size, or a shape of the object for generating a virtual object according to the user's intent.

The speech information extraction module 143 is composed of instructions or program code related to functions and/or operations of recognizing a voice input and extracting object characteristic information from the voice input. In one or more embodiments of the disclosure, the speech information extraction module 143 may include an ASR model and an NLU model. The processor 130 may convert a voice input, i.e., sound, obtained through the microphone 120 into an acoustic signal, and remove noise (e.g., non-speech components) from the acoustic signal to obtain a speech signal. The processor 130 may execute the instructions or program code of the speech information extraction module 143 to obtain object characteristic information from the obtained speech signal. In one or more embodiments of the disclosure, the processor 130 may perform ASR to convert the speech signal into text and analyze the text by using an NLU model to thereby recognize the user's intent and named entities. The processor 130 may obtain object characteristic information including at least one of a type, a shape, a color, or a theme of the object, which is necessary for generating a virtual object according to the user's intent and named entities.

The guide information extraction module 144 is composed of instructions or program code related to a function and/or an operation of extracting object characteristic information from a 2D guide image. In the disclosure, the '2D guide image' refers to an image for providing guide information regarding a type, a shape, or a theme of the object necessary for the electronic device 100 to generate a 3D virtual object. In one or more embodiments of the disclosure, the electronic device 100 may further include a communication interface and receive a 2D guide image from an external server or storage device (e.g., a web-based database) through the communication interface. However, the disclosure is not limited thereto, and the electronic device 100 may obtain the 2D guide image 50 input via a user input.

In one or more embodiments of the disclosure, the guide information extraction module 144 may include an object recognition model composed of an Al model. The object recognition model may be a DNN model trained to recognize an object via supervised learning that applies a bounding box image that may be recognized as an object from a plurality of training images as input data and applies label values for the type, shape, color, and theme of the object within a bounding box as ground truth. The DNN model may be implemented as an object recognition model, such as, but not limited to, a CNN, a region-based CNN (R-CNN), YOLO v4, CenterNet, or MobileNet. The processor 130 may execute the instructions or program code of the guide information extraction module 144 to extract object characteristic information including at least one of the type, shape, color, or theme of the object from the 2D guide image.

While FIGS. 3 and 4 illustrate that the memory 140 includes the guide information extraction module 144, the guide information extraction module 144 may be omitted depending on one or more embodiments of the disclosure.

The information mixing module 145 is composed of instructions or program code related to a function and/or an operation of obtaining object generation information by mixing spatial information with object characteristic information. Referring to FIG. 4, the information mixing module 145 may receive the spatial information including the type, theme, atmosphere, etc. of the space, which is output by the spatial information extraction module 141. Furthermore, the information mixing module 145 may receive object characteristic information regarding the shape, location, size, etc. of the object from the gesture information extraction module 142, receive object characteristic information regarding the type, shape, theme, etc. of the object from the speech information extraction module 143, and receive object characteristic information about the type, shape, theme, etc. of the object from the guide information extraction module 144. The processor 130 may execute the instructions or program code of the information mixing module 145 to obtain object generation information for generating a virtual object by mixing the spatial information received from the spatial information extraction module 141 with the pieces of object characteristic information respectively from the gesture information extraction module 142, the speech information extraction module 143, and the guide information extraction module 144.

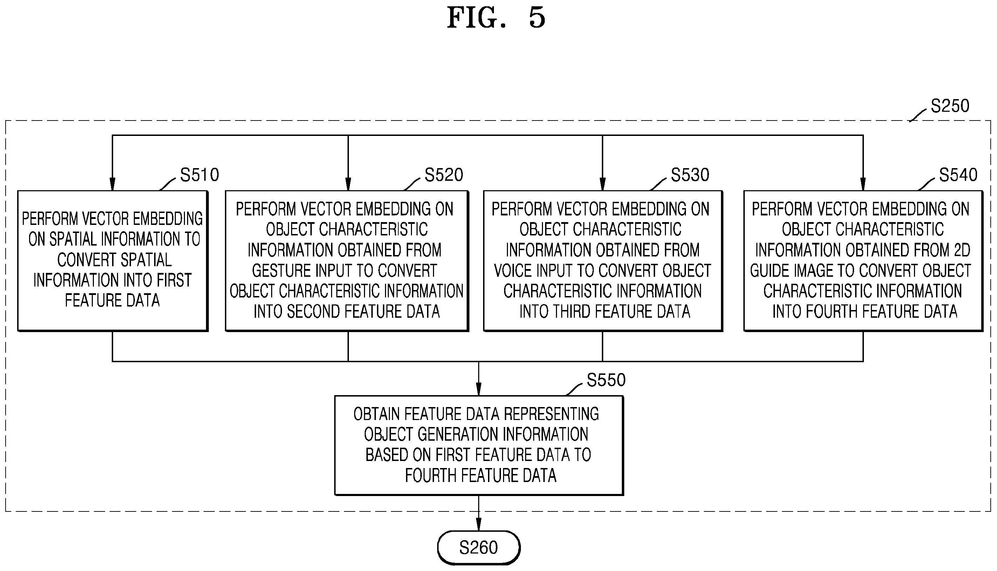

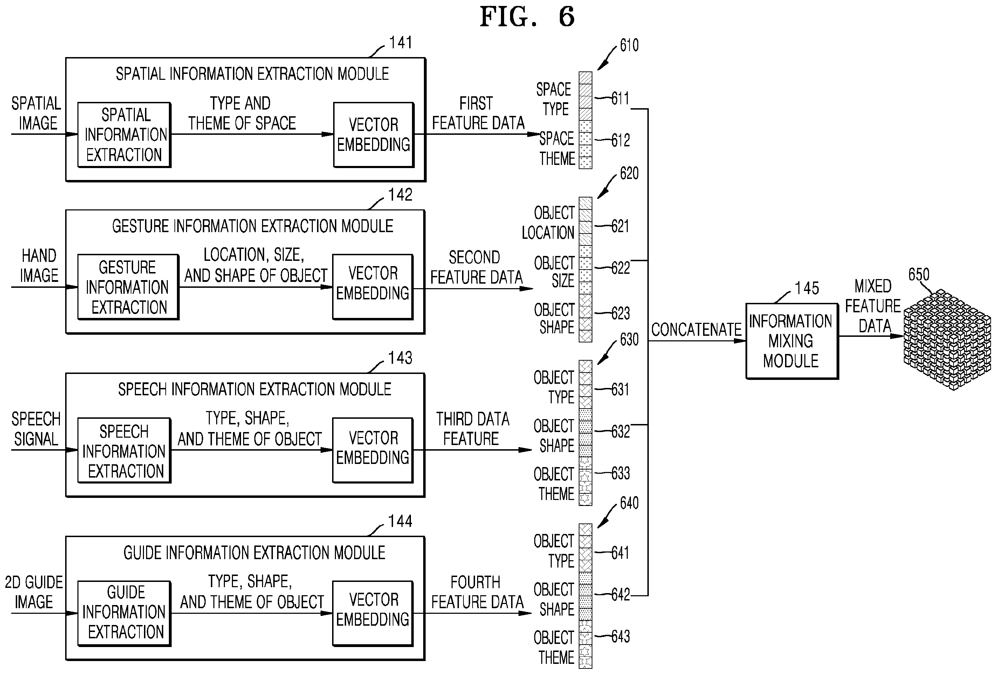

In one or more embodiments of the disclosure, the processor 130 may respectively perform embeddings on the spatial information and the pieces of object characteristic information to convert them into pieces of feature data, and obtain feature data representing the object generation information by mixing the pieces of feature data. A specific embodiment of the disclosure in which the processor 130 obtains feature data representing object generation information is described in detail with reference to FIGS. 5 and 6.

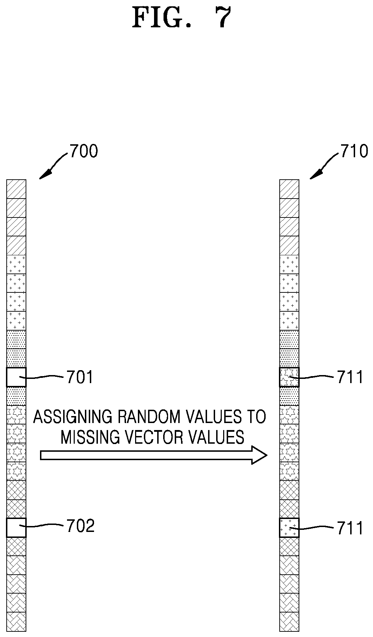

In one or more embodiments of the disclosure, when a vector value of the embedded feature data representing the spatial information or object characteristic information is missing, the processor 130 may assign a random value that is a randomly generated number as the missing vector value. A specific embodiment of the disclosure in which the processor 130 assigns a random value as a missing vector value is described in detail with reference to FIG. 7.

The generative Al model 146 is an Al model trained to generate a 3D virtual object based on spatial information and object characteristic information. In one or more embodiments of the disclosure, the generative Al model 146 may be implemented as a GAN or a diffusion model based on multi-modalities. A diffusion model based on multi-modalities may be implemented, for example, as Stable Diffusion or SDFusion. However, the generative Al model 146 is not limited thereto, and may include any known Al model in the art trained to generate a 3D virtual object based on spatial information and object characteristic information. Referring to FIG. 4 in conjunction with FIG. 3, the processor 130 may input the object generation information obtained by the information mixing module 145 to the generative Al model 146 and perform inferencing using the generative Al model 146 to thereby generate a 3D virtual object corresponding to the object generation information. In one or more embodiments of the disclosure, the processor 130 may generate a 3D virtual object through inferencing performed by inputting a vector representing the object generation information to the generative Al model 146. The processor 130 may display, on the display 150, the 3D virtual object generated by the generative Al model 146.

Referring to FIG. 3, the object modification module 147 is composed of instructions or program code related to a function and/or an operation of modifying object generation information based on a user input. In one or more embodiments of the disclosure, the electronic device 100 may receive a gesture input for modifying the object generation information. However, the disclosure is not limited thereto, and when the electronic device 100 is implemented as a mobile device including a touch screen, such as a smartphone or a tablet PC, the electronic device 100 may receive a user's touch input for modifying the object generation information. In one or more embodiments of the disclosure, the electronic device 100 may receive a user input for adjusting a weight value assigned to each of multi-modality inputs, i.e., the spatial information obtained from the spatial image, the object characteristic information obtained from the gesture input, the object characteristic information obtained from the voice input, and the object characteristic information obtained from the 2D guide image, and the processor 130 may modify the object generation information based on the user input. In one or more embodiments of the disclosure, the electronic device 100 may receive from the user a gesture input or touch input for changing at least one of the shape, size, location, color, type, or theme of the object, and the processor 130 may modify the object generation information based on the received gesture input or touch input. A specific embodiment of the disclosure in which the processor 130 modifies object generation information based on a user input is described in detail with reference to FIGS. 8 to 11.

The display 150 is configured to display a 3D virtual object according to control by the processor 130. When the electronic device 100 is an AR device such as AR glasses, the display 150 may be composed of a lens optical system and include a waveguide and an optical engine. The optical engine may consist of a projector for generating light of a 3D virtual object composed of a virtual image and projecting the light onto the waveguide. The optical engine may include, for example, an image panel, an illumination optical system, a projection optical system, etc. In one or more embodiments of the disclosure, the optical engine may be disposed in a frame or temples of the AR glasses. In one or more embodiments of the disclosure, the optical engine may display a virtual object by projecting the 3D virtual object onto the waveguide according to control by the processor 130.

However, the disclosure is not limited thereto, and the display 150 may include at least one of, for example, an LCD, a TFT-LCD, an OLED display, a flexible display, a 3D display, or an electrophoretic display. In this case, the display 150 may be configured as a touch screen including a touch pad.

FIG. 5 is a flowchart of a method, performed by the electronic device 100, of obtaining feature data representing object generation information, according to one or more embodiments of the disclosure.

Operations S510 to S550 of FIG. 5 are detailed operations of operation S250 illustrated in FIG. 2. After operation S550 of FIG. 5 is performed, operation S260 illustrated in FIG. 2 may be performed.

FIG. 6 is a diagram illustrating an operation in which the electronic device 100 obtains feature data representing object generation information by embedding multi-modality information, according to one or more embodiments of the disclosure.

An operation in which the electronic device 100 obtains feature data representing object generation information by embedding multi-modality information is described with reference to FIGS. 5 and 6 together.

In operation S510 of FIG. 5, the electronic device 100 converts the spatial information into first feature data by performing vector embedding on the spatial information. Here, 'feature data' refers to data encompassing an n-dimensional vector with one or more dimensions, a matrix, a feature vector, or the like. Referring to FIG. 6 in conjunction with FIG. 5, the electronic device 100 may obtain spatial information about a real-world space from a spatial image obtained through the camera (110 of FIGS. 1 and 3), and convert the obtained spatial information into first feature data 610 by performing vector embedding thereon. The processor (130 of FIG. 3) of the electronic device 100 may execute instructions or program code of the spatial information extraction module 141 to extract spatial information including at least one of a type or a theme of the real-world space from the spatial image, and perform vector embedding on the extracted spatial information. A vector embedding model is a model that digitizes information in the form of text into vector values, and may be implemented as a known embedding model such as a one-hot encoding model, a label encoding model, or the like.

However, the disclosure is not limited thereto, and the processor 130 may convert the spatial information into a tensor such as an n-dimensional vector with one or more dimensions, a matrix, or a feature vector. Because functions and/or operations of vector embedding models respectively included in the gesture information extraction module 142, the speech information extraction module 143, and the guide information extraction module 144 are the same as the vector embedding model included in the spatial information extraction module 141, descriptions already provided above are omitted below. In the embodiment of the disclosure shown in FIG. 6, the processor 130 may execute a vector embedding module to obtain first feature data 610 by respectively embedding the type of the real-world space and the theme of the real-world space included in the spatial information into vector values. The first feature data 610 may include first spatial data 611 obtained by converting information about the type of the real-world space into vector values, and second spatial data 612 obtained by converting information about the theme of the real-world space into vector values.

In operation S520 of FIG. 5, the electronic device 100 converts object characteristic information obtained from a gesture input into second feature data by performing vector embedding on the object characteristic information. Referring to FIG. 6 in conjunction with FIG. 5, the processor 130 of the electronic device 100 may execute instructions or program code of the gesture information extraction module 142 to recognize a user's gesture input from a hand image, extract, from the gesture input, object characteristic information including at least one of a location, a size, or a shape of the object according to the user's intent, and perform vector embedding on the extracted object characteristic information. In the embodiment of the disclosure shown in FIG. 6, the processor 130 may execute a vector embedding module to obtain second feature data 620 by respectively embedding the location, size, and shape of the object included in the object characteristic information. The second feature data 620 may include first object characteristic data 621 obtained by converting information about the location of the object into vector values, second object characteristic data 622 obtained by converting information about the size of the object into vector values, and third object characteristic data 623 obtained by converting information about the shape of the object into vector values.

In operation S530 of FIG. 5, the electronic device 100 converts object characteristic information obtained from a voice input into third feature data by performing vector embedding on the object characteristic information. Referring to FIG. 6 in conjunction with FIG. 5, the processor 130 of the electronic device 100 may execute instructions or program code of the speech information extraction module 143 to extract, from a voice input obtained through the microphone (120 of FIGS. 1 and 3), object characteristic information including at least one of a type, a shape, or a theme of the object according to the user's intent, and perform vector embedding on the extracted object characteristic information. In the embodiment of the disclosure shown in FIG. 6, the processor 130 may execute a vector embedding module to obtain third feature data 630 by respectively embedding the type, shape, and theme of the object included in the object characteristic information. The third feature data 630 may include first object characteristic data 631 obtained by converting information about the type of the object into vector values, second object characteristic data 632 obtained by converting information about the shape of the object into vector values, and third object characteristic data 633 obtained by converting information about the theme of the object into vector values.

In operation S540 of FIG. 5, the electronic device 100 converts object characteristic information obtained from a 2D guide image into fourth feature data by performing vector embedding on the object characteristic information. Referring to FIG. 6 in conjunction with FIG. 5, the processor 130 of the electronic device 100 may execute instructions or program code of the guide information extraction module 144 to extract object characteristic information including at least one of a type, a shape, and a theme of the object from the 2D guide image, and perform vector embedding on the extracted object characteristic information. In the embodiment of the disclosure shown in FIG. 6, the processor 130 may execute a vector embedding module to obtain fourth feature data 640 by respectively embedding the type, shape, and theme of the object included in the object characteristic information. The fourth feature data 640 may include first object characteristic data 641 obtained by converting information about the type of the object into vector values, second object characteristic data 642 obtained by converting information about the shape of the object into vector values, and third object characteristic data 643 obtained by converting information about the theme of the object into vector values.

Operations S510 to S540 illustrated in FIG. 5 may be performed at the same time, but are not limited thereto. In one or more embodiments of the disclosure, operations S510 to S540 may be performed sequentially in any order with a time difference.

In FIG. 6, the first feature data 610 is shown as an 8-dimensional (8D) vector, and the second feature data 620, the third feature data 630, and the fourth feature data 640 are each shown as a 12-dimensional (12D) vector, but this is for convenience of description, and one or more embodiments of the disclosure is not limited to that shown in FIG. 6. In one or more embodiments of the disclosure, the first feature data 610 to the fourth feature data 640 may each be implemented as an n-dimensional vector with one or more dimensions.

In operation S550 of FIG. 5, the electronic device 100 obtains a vector representing object generation information based on the first feature data 610 to the fourth feature data 640. Referring to FIG. 6 in conjunction with FIG. 5, the processor 130 of the electronic device 100 may input the first feature data 610, the second feature data 620, the third feature data 630, and the fourth feature data 640 to the information mixing module 145 and execute instructions or program code of the information mixing module 145 to obtain mixed feature data 650 by concatenating the first feature data 610, the second feature data 620, the third feature data 630, and the fourth feature data 640. In one or more embodiments of the disclosure, the processor 130 may obtain the mixed feature data 650 by mixing the first feature data 610 to the fourth feature data 640 by using an MLP technique. However, the disclosure is not limited thereto, the processor 130 may obtain the mixed feature data 650 representing the object generation information by inputting the first feature data 610 to the fourth feature data 640 to a CNN or RNN.

In the embodiment of the disclosure shown in FIG. 6, the mixed feature data 650 may be composed of an n-dimensional vector, matrix, or feature vector. In one or more embodiments of the disclosure, the mixed feature data 650 may be a vector in which the vector values of the first feature data 610, the second feature data 620, the third feature data 630, and the fourth feature data 640 are arranged in a column according to results of the MLP.

The electronic device 100 may generate a 3D virtual object based on the object generation information by inputting the mixed feature data 650 including data values (e.g., vector values) related to the object generation information to the generative Al model (146 of FIGS. 1 and 3) and performing inferencing using the generative Al model 146.

FIG. 7 is a diagram illustrating an operation in which the electronic device 100 assigns random values to missing vector values in a vector 700 representing object generation information, according to one or more embodiments of the disclosure.

Referring to FIG. 7, the vector 700 may contain vector values into which object generation information including spatial information and pieces of object characteristic information has been converted by undergoing vector embedding. In one or more embodiments of the disclosure, the vector 700 may be a vector obtained by concatenating, via an MLP, the first feature data (610 of FIG. 6) obtained by performing vector embedding on the spatial information extracted from the spatial image, the second feature data (620 of FIG. 6) obtained by performing vector embedding on the object characteristic information extracted from the gesture input, the third feature data (630 of FIG. 6) obtained by vector embedding on the object characteristic information extracted from the voice input, and the fourth feature data (640 of FIG. 6) obtained by performing vector embedding on the object characteristic information extracted from the 2D guide image.

The vector 700 contains the vector values, but may have some missing vector values in first and second elements 701 and 702. In the embodiment of the disclosure shown in FIG. 7, the first element 701 and the second element 702 may not have vector values. In one or more embodiments of the disclosure, the processor (130 of FIG. 3) of the electronic device 100 may randomly generate random values 711 and 712, and assign the randomly generated random values, i.e., first and second random values 711 and 712, to the first element 701 and the second element 702 with missing vector values. For example, the processor 130 may assign the first random value 711 to the first element 701 and the second random value 712 to the second element 702. By doing so, the processor 130 may obtain a reconstructed vector 710.

In the embodiment of the disclosure shown in FIG. 7, to maintain the dimension of the vector 700 to be input to the generative Al model (146 of FIGS. 1 and 3), the electronic device 100 may fill the empty elements, i.e., the first and second elements 701 and 702, with vector values by assigning the randomly generated random values, i.e., the first and second random values 711 and 712, to the first and second elements 701 and 702 with the missing vector values. Because the reconstructed vector 710 contains the first and second random values 711 and 712, when the reconstructed vector 710 is input to the generative Al model 146, a 3D virtual object may be generated to have a shape, size, location, type, theme, or atmosphere that does not correspond to the user's intent. In this case, the user may modify the object generation information.

FIG. 8 is a flowchart illustrating a method, performed by the electronic device 100, of generating a 3D virtual object by modifying object generation information based on a user input, according to one or more embodiments of the disclosure.

Operations S810 to S830 of FIG. 8 may be performed after operation S230 illustrated in FIG. 2 is performed. After operation S830 of FIG. 8 is performed, operation S250 illustrated in FIG. 2 may be performed.

In operation S810, the electronic device 100 receives a user input for modifying object generation information. In one or more embodiments of the disclosure, the electronic device 100 may receive a user input for adjusting a weight applied to each of the pieces of multi-modality information. For example, the electronic device 100 may receive a user input for adjusting a value of a weight assigned to each of the spatial information obtained from the spatial image, the object characteristic information obtained from the gesture input, the object characteristic information obtained from the voice input and the object characteristic information obtained from the 2D guide image.

In one or more embodiments of the disclosure, the electronic device 100 may receive a user input for changing at least one of the shape, size, location, color, type, or theme of the object. For example, the electronic device 100 may receive a gesture input for modifying the shape, size, location, etc. of the object.

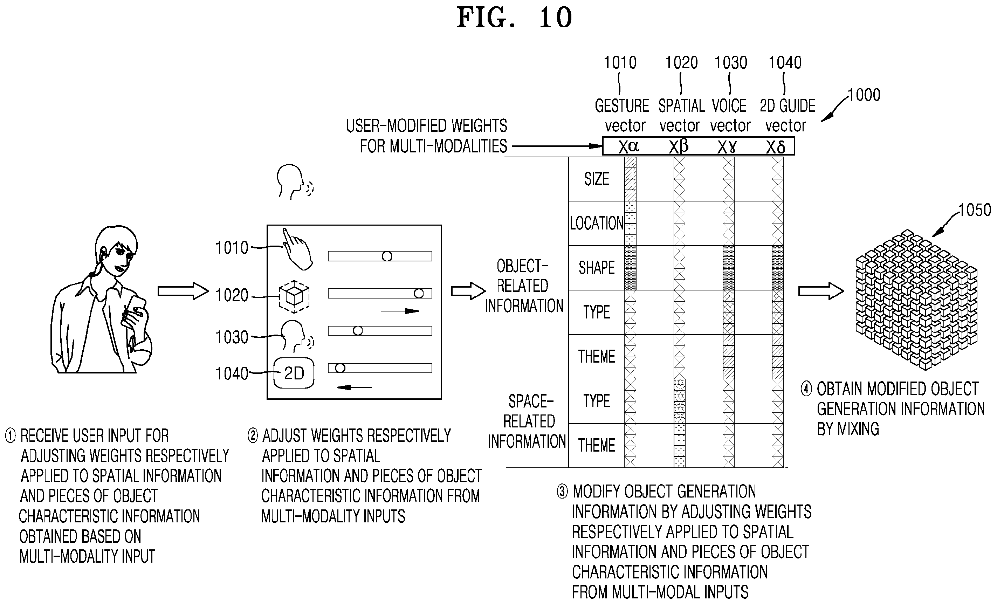

In operation S820, the electronic device 100 modifies the object generation information based on the received user input. In one or more embodiments of the disclosure, the electronic device 100 may change, based on a user input for adjusting a weight applied to each of the pieces of multi-modality information, a weight assigned to each of the spatial information obtained from the spatial image, the object characteristic information obtained from the gesture input, the object characteristic information obtained from the voice input, and the object characteristic information obtained from the 2D guide image. A specific embodiment of the disclosure in which the electronic device 100 modifies a weight applied to each of the pieces of multi-modality information based on a user input is described in detail below with reference to FIG. 10.

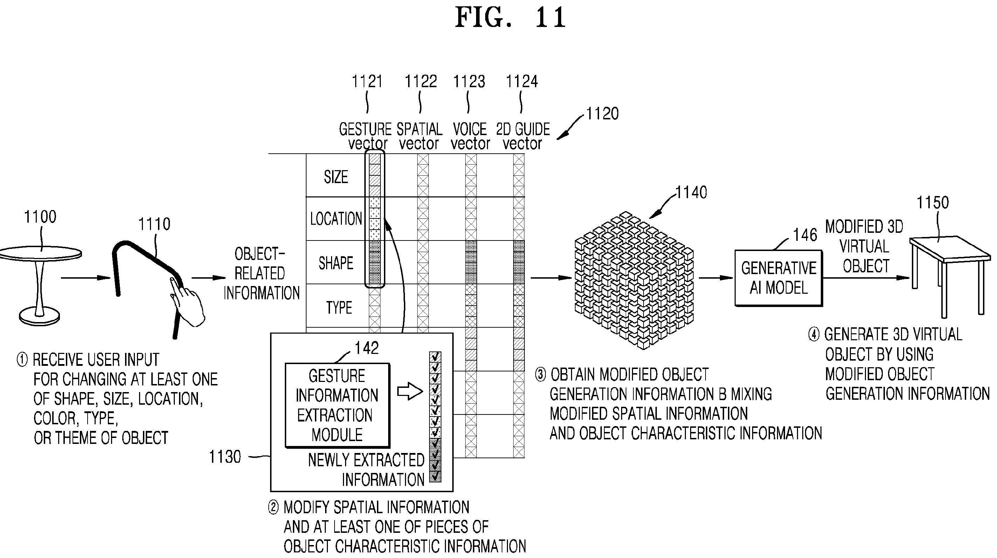

In one or more embodiments of the disclosure, the electronic device 100 may modify, based on the user input, at least one of the shape, size, location, color, type, or theme of the object included in the object generation information. A specific embodiment of the disclosure which the electronic device 100 modifies object generation information based on a user input is described in detail below with reference to FIG. 11.

In operation S830, the electronic device 100 may generate a 3D virtual object by inputting the modified object generation information to the generative Al model and performing inferencing using the generative Al model . Because the object generation information has been modified, a shape, size, location, color, type, or theme of the 3D virtual object obtained by the generative Al model 146 may be changed.

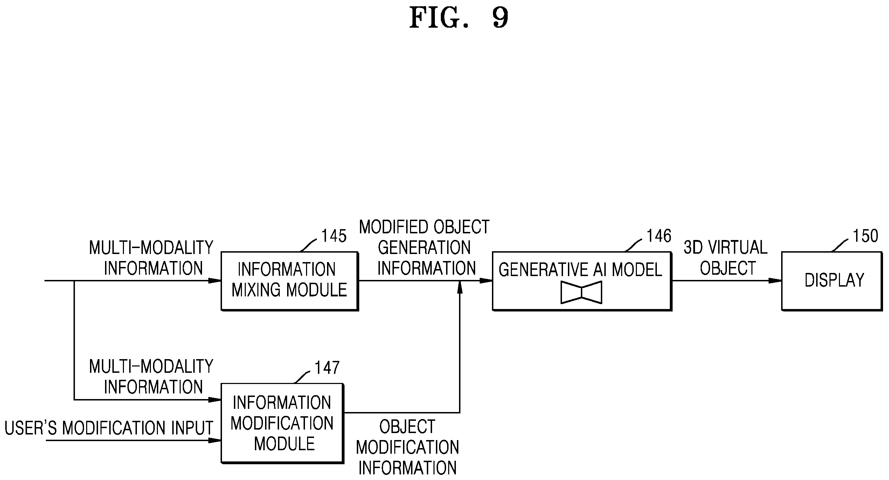

FIG. 9 is a diagram illustrating components of the electronic device 100 for generating a 3D virtual object by modifying object generation information, according to one or more embodiments of the disclosure.

Referring to FIG. 9, pieces of multi-modality information are input to the information mixing module 145. In one or more embodiments of the disclosure, 'the pieces of multi-modality information' may include spatial information obtained from a spatial image, object characteristic information obtained from a gesture input, object characteristic information obtained from a voice input, and object characteristic information obtained from a 2D guide image.

An object modification module 147 receives the pieces of multi-modality information and a user's modification input. In one or more embodiments of the disclosure, the user's modification input may be a user input for adjusting a weight **applied** to each of the pieces of multi-modality information, or a user input for changing at least one of the shape, size, location, color, type, or theme of the object. The processor (130 of FIG. 3) of the electronic device 100 may execute instructions or program code of the object modification module 147 to modify object generation information according to a user input. The object modification module 147 may output object modification information.

The processor 130 may execute instructions or program code of the information mixing module 145 to modify object generation information based on the pieces of multi-modality information by using the object modification information and obtain the modified object generation information. In one or more embodiments of the disclosure, the processor 130 may modify the object generation information by concatenating vectors obtained by respectively performing vector embeddings on the pieces of multi-modality information via an MLP and modifying vector values of a vector obtained as a result of the concatenation.

The processor 130 may generate a 3D virtual object for the modified object generation information obtained as a result of the modification by inputting the vector representing the modified object generation information to the generative Al model 146.

FIG. 10 is a diagram illustrating an operation in which the electronic device 100 modifies object generation information by receiving a user input for adjusting weights for pieces of multi-modality information (e.g., 1010, 1020, 1030, and 1040), according to one or more embodiments of the disclosure.

Referring to FIG. 10, the electronic device 100 receives a user input for adjusting weights for spatial information and pieces of object characteristic information obtained based on pieces of multi-modality information (operation ①). The electronic device 100 may receive a user input for respectively changing weights respectively applied to pieces of multi-modality information, i.e., object characteristic information 1010 obtained from a gesture input, spatial information 1020 obtained from a spatial image, object characteristic information 1030 obtained from a voice input, and object characteristic information 1040 obtained from a 2D guide image. In the embodiment of the disclosure shown in FIG. 10, the electronic device 100 is implemented as a mobile device including a touch screen, such as a smart phone or tablet PC, and may receive a user's touch input for changing the weights. However, the disclosure is not limited thereto, when the electronic device 100 is implemented as an AR device such as AR glasses or an HMD apparatus, the electronic device 100 may receive a user's hand pointing input for changing the weights. In one or more embodiments of the disclosure, the electronic device 100 may include an eye-tracking sensor, and may receive a user input for modifying the weights respectively applied to the pieces of multi-modality information based on a gaze point according to a direction of the user's gaze obtained using the eye-tracking sensor.

The electronic device 100 adjusts the weights respectively applied to the pieces of multi-modality information (operation ②). In one or more embodiments of the disclosure, the processor (130 of FIG. 3) of the electronic device 100 may change, based on the user input, the weights respectively applied to the object characteristic information 1010 obtained from the gesture input, the spatial information 1020 obtained from the spatial image, the object characteristic information 1030 obtained from the voice input, and the object characteristic information 1040 obtained from the 2D guide image. In the embodiment of the disclosure shown in FIG. 10, the object characteristic information 1010 obtained from the gesture input may include information about the size, location, and shape of the object and be composed of vector values converted via vector embedding, and a first weight α may be applied to the object characteristic information 1010 via the user input. The spatial information 1020 obtained from the spatial image may include information about the type and theme of the real-world space and be composed of vector values converted via vector embedding, and a second weight β may be applied to the spatial information 1020 via the user input. The object characteristic information 1030 obtained from the voice input may include information about the shape, type, and theme of the object and be composed of vector values converted via vector embedding, and a third weight γ may be applied to the object characteristic information 1030 via the user input. The object characteristic information 1040 obtained from the 2D guide image may include information about the shape, type, and theme of the object and be composed of vector values converted via vector embedding, and a fourth weight δ may be applied to the object characteristic information 1040 via the user input.

The electronic device 100 modifies object generation information by adjusting the weights respectively applied to the pieces of multi-modality information (operation ③). In the embodiment of the disclosure shown in FIG. 10, the processor 130 of the electronic device 100 may modify the object generation information by applying the first weight α to the object characteristic information 1010 obtained from the gesture input, the second weight β to the spatial information 1020 obtained from the spatial image, the third weight γ to the object characteristic information 1030 obtained from the voice input, and the fourth weight δ to the object characteristic information 1040 obtained from the 2D guide image.

The electronic device 100 obtains modified object generation information 1050 by mixing the spatial information and pieces of object characteristic information for which the weights have been adjusted (operation ④). In one or more embodiments of the disclosure, the processor 130 of the electronic device 100 may obtain the modified object generation information 1050 by concatenating, via an MLP, vector values for the object characteristic information 1010 to which the first weight α is applied, the spatial information 1020 to which the second weight β is applied, the object characteristic information 1030 to which the third weight γ is applied, and the object characteristic information to which the fourth weight δ is applied. However, the disclosure is not limited thereto, the processor 130 may obtain the modified object generation information 1050 by inputting, to a CNN or RNN, vector values for the object characteristic information 1010 to which the first weight α is applied, the spatial information 1020 to which the second weight β is applied, the object characteristic information 1030 to which the third weight γ is applied, and the object characteristic information to which the fourth weight δ is applied.

The processor 130 of the electronic device 100 may input the modified object generation information 1050 to the generative Al model (146 of FIGS. 1 and 3), and generate a 3D virtual object modified according to the user's intent via inferencing using the generative Al model 146.

FIG. 11 is a diagram illustrating an operation in which the electronic device 100 modifies object generation information by receiving a user input for modifying a shape, size, and location of an object, according to one or more embodiments of the disclosure.

Referring to FIG. 11, the electronic device 100 receives a user input for changing at least one of a shape, a size, a location, a color, a type, or a theme of an **object** (operation ①). In one or more embodiments of the disclosure, the electronic device 100 may display a 3D virtual object 1100 and receive a gesture input 1110 from the user changing at least one of a shape, a size, a location, a color, a type, or a theme of the displayed 3D virtual object. In the embodiment of the disclosure shown in FIG. 11, the electronic device 100 may receive the gesture input 1110 from the user drawing a tilted '∩' shape. However, the disclosure is not limited thereto, and in one or more embodiments of the disclosure, when the electronic device 100 is implemented as a mobile device including a touch screen, such as a smartphone or tablet PC, the electronic device 100 may receive a user's touch input for changing at least one of the shape, size, location, color, type, or theme of the 3D virtual object 1100 displayed on the touch screen. In one or more embodiments of the disclosure, the electronic device 100 may input a spatial image obtained by capturing a space other than the space used to generate the 3D virtual object 1100.

The electronic device 100 modifies at least one of spatial information or object characteristic information based on the user input (operation ②). In the embodiment of the disclosure shown in FIG. 11, object generation information 1120 may include object characteristic information 1121 obtained from a gesture input, spatial information 1122 obtained from a spatial image, object characteristic information 1123 obtained from a voice input, and object characteristic information 1124 obtained from a 2D guide image. In one or more embodiments of the disclosure, the processor (130 of FIG. 3) of the electronic device 100 may execute instructions or program code of the gesture information extraction module 142 to obtain object modification information 1130 by performing vector embedding on the gesture input 1110 received from the user. The processor 130 may replace the object characteristic information 1121 included in the object generation information 1120 by using the obtained object modification information 1130.

The electronic device 100 obtains modified object generation information 1140 by mixing the modified spatial information and object characteristic information (operation ③). In one or more embodiments of the disclosure, the processor 130 of the electronic device 100 may obtain the modified object generation information 1140 by concatenating the object modification information 1130, the spatial information 1122, and the pieces of object characteristic information 1123 and 1124 via an MLP. The **modified** object generation information 1140 may be a vector that includes vector values of the object modification information 1130, vector values of the spatial information 1122, and vector values of the pieces of object characteristic information 1123 and 1124. However, the disclosure is not limited thereto, and the processor 130 may obtain the modified object generation information 1140 by inputting the vector values representing the object modification information 1130, the spatial information 1122, and the pieces of object characteristic information 1123 and 1124 to a CNN or RNN.

The electronic device 100 generates a 3D virtual object 1150 by using the modified object generation information 1140 (operation ④). In one or more embodiments of the disclosure, the processor 130 of the electronic device 100 may generate the 3D virtual object 1150 by inputting the modified object generation information 1140 to the generative Al model 146 and performing inferencing using the generative Al model 146.

In the embodiment of the disclosure shown in FIG. 11, the 3D virtual object 1100 that is previously generated is a desk that includes a circular top plate and a circular bottom plate and has one leg connecting the top plate with the bottom plate, and based on the gesture input 1110 received from the user, may be modified into the 3D virtual object 1150, which is a '∩' shaped desk having a top plate and two legs.

In the embodiments of the disclosure illustrated in FIGS. 8 to 11, the electronic device 100 may receive a user input for adjusting the weights respectively applied to the pieces of multi-modality information, or a user input for changing at least one of the shape, size, location, color, type, or theme of the object, and modify a 3D virtual object based on the received user input. According to one or more embodiments of the disclosure, by allowing the user to further modify the initially generated 3D virtual object, the electronic device 100 not only enables the user to interact with an AR service but also enables a plurality of users to share the experience of the AR service.

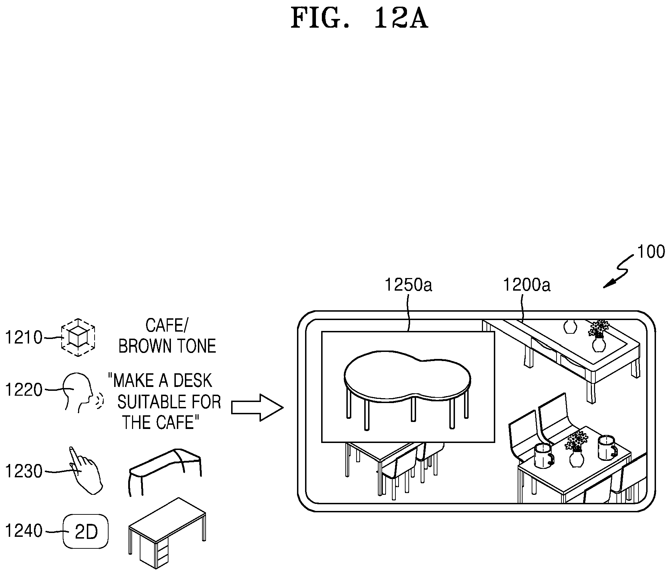

FIG. 12A is a diagram illustrating an operation in which the electronic device 100 generates a 3D virtual object 1250a based on pieces of multi-modality information (e.g., 1210, 1220, 1230, and 1240) and displays the generated 3D virtual object 1250a, according to one or more embodiments of the disclosure.

In the embodiment of the disclosure illustrated in FIG. 12A, the electronic device 100 may obtain spatial information of 'brown tone of a cafe' from a spatial image 1210, obtain object characteristic information from a voice input 1220 "Make a desk suitable for the cafe", obtain object characteristic information regarding the shape, size, location, etc. of an object from a gesture input 1230 for drawing a desk shape, and obtain object characteristic information regarding the shape, size, type, color, theme, etc. of the object from a 2D guide image 1240 including a white desk with drawers. The processor (130 of FIG. 3) of the electronic device 100 may convert the obtained pieces of information into vector values by performing vector embedding and generate the 3D virtual object 1250a by inputting the vector values as a result of the embedding to the generative Al model (146 of FIGS. 1 and 3). In the embodiment of the disclosure illustrated in FIG. 12A, the 3D virtual object 1250a may be a 3D graphic of a desk having a shape (e.g., made of wood with rounded corners) and a color (e.g., brown) that match a tone, a theme, or an atmosphere of a real-world space 1café (e.g., cafe).

The electronic device 100 may display the generated 3D virtual object 1250a by overlaying the 3D virtual object 1250a on the real-world space 1200a. While FIG. 12A illustrates that the electronic device 100 implemented as a mobile device displays the real-world space 1200a and the 3D virtual object 1250a on a display, the disclosure is not limited thereto. In one or more embodiments of the disclosure, the electronic device 100 may be implemented as an AR device such as AR glasses, and display the real-world space 1200a transmitted through an optical lens and the 3D virtual object 1250a projected through a waveguide in an AR or mixed reality format.

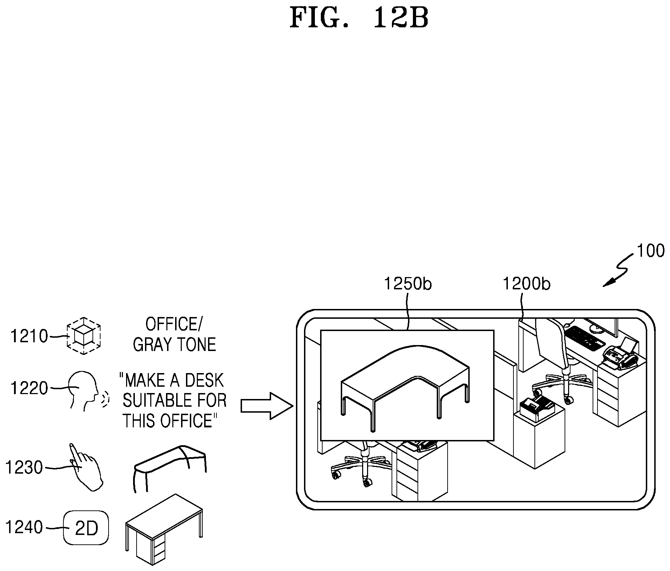

FIG. 12B is a diagram illustrating an operation in which the electronic device 100 generates a 3D virtual object 1250b based on pieces of multi-modality information (e.g., 1210, 1220, 1230, and 1240) and displays the generated 3D virtual object 1250b, according to one or more embodiments of the disclosure.

The embodiment of the illustrated in FIG. 12B is the same as the embodiment of the disclosure illustrated in FIG. 12A except that a real-world space 1200b is a gray-toned office, not a cafe, and the electronic device 100 receives a voice input 1220 "Make a desk suitable for this office," and thus descriptions already provided above are omitted.

Referring to FIG. 12B, the electronic device 100 may generate the 3D virtual object 1250b by inputting, to the generative Al model (146 of FIGS. 1 and 3), a mixture of the pieces of multi-modality information including a spatial image 1210, the voice input 1220, a gesture input 1230, and a 2D guide image 1240 and performing inferencing on the mixture thereof. In the embodiment of the disclosure shown in FIG. 12B, the 3D virtual object 1250b may be a 3D graphic of a desk having a shape (e.g., a steel shape with angled corners) and a color (e.g., gray) that match the gray tone, theme, or atmosphere of the real-world space 1200b (e.g., office). The electronic device 100 may display the generated 3D virtual object 1250b by overlaying the 3D virtual object 1250b on the real-world space 1200b.

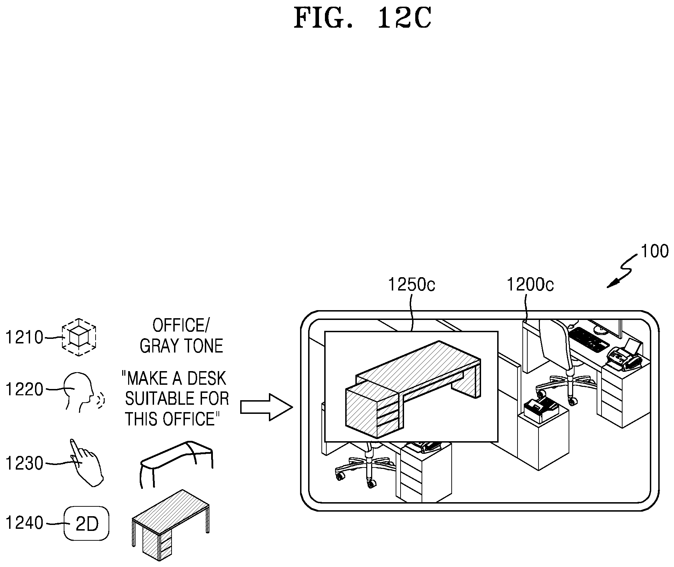

FIG. 12C is a diagram illustrating an operation in which the electronic device 100 generates a 3D virtual object 1250c based on pieces of multi-modality information (e.g., 1210, 1220, 1230, and 1240) and displays the generated 3D virtual object 1250c, according to one or more embodiments of the disclosure.

The embodiment of the disclosure illustrated in FIG. 12C is the same as the embodiment of the disclosure illustrated in FIG. 12B except that a 2D guide image 1240 is an image including a desk made of wood having a brown tone, and thus, descriptions already provided above are omitted.

Referring to FIG. 12C, the electronic device 100 may generate the 3D virtual object 1250c by inputting, to the generative Al model (146 of FIGS. 1 and 3), a mixture of the pieces of multi-modality information including a spatial image 1210, a voice input 1220, a gesture input 1230, and the 2D guide image 1240 and performing inferencing on the mixture thereof. In the embodiment of the disclosure illustrated in FIG. 12C, the 3D virtual object 1250c may be a 3D graphic of a desk having a shape (e.g., made of wood with angled corners) and a color (e.g., brown) that match a tone, a theme, or an atmosphere) of a real-world space 1200c (e.g., office). The electronic device 100 may display the generated 3D virtual object 1250c by overlaying the 3D virtual object 1250c on the real-world space 1200c.

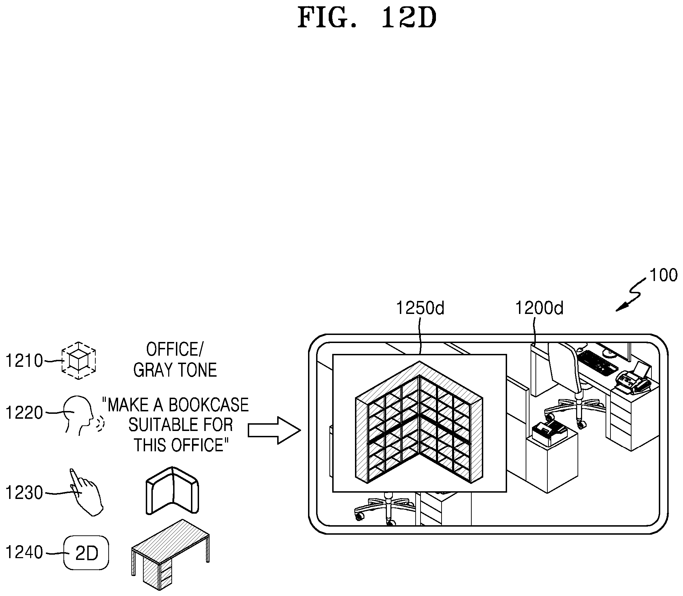

FIG. 12D is a diagram illustrating an operation in which the electronic device 100 generates a 3D virtual object 1250d based on pieces of multi-modality information (e.g., 1210, 1220, 1230, and 1240) and displays the generated 3D virtual object 1250d, according to one or more embodiments of the disclosure.

The embodiment of the illustrated in FIG. 12D is the same as the embodiment of the disclosure illustrated in FIG. 12C except that the electronic device 100 receives a voice input 1220 "Make a bookcase suitable for this office," and thus, descriptions already provided above are omitted.

Referring to FIG. 12D, the electronic device 100 may generate the 3D virtual object 1250d by inputting, to the generative Al model (146 of FIGS. 1 and 3), a mixture of the pieces of multi-modality information including a spatial image 1210, the voice input 1220, a gesture input 1230, and a 2D guide image 1240 and performing inferencing on the mixture thereof. In the embodiment of the disclosure illustrated in FIG. 12D, the 3D virtual object 1250d may be a 3D graphic of a bookcase having a shape (e.g., made of wood with angled corners) and a color (e.g., brown) that match a tone, a theme, or an atmosphere of a real-world space 1200d (e.g., office). The electronic device 100 may display the generated 3D virtual object 1250d by overlaying the 3D virtual object 1250d on the real-world space 1200d.

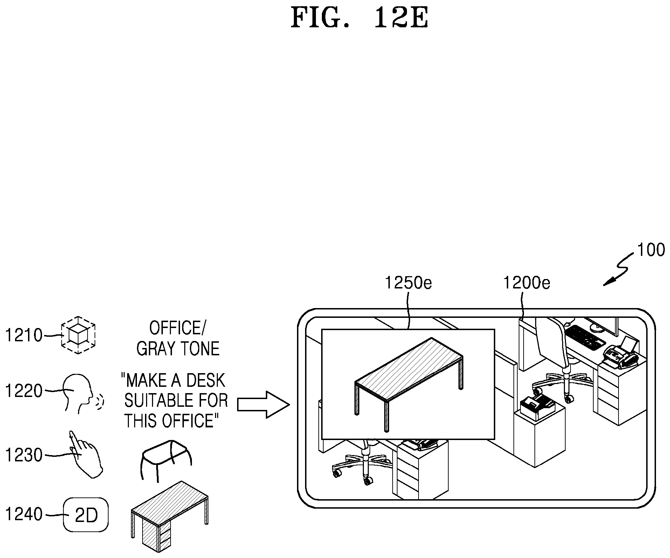

FIG. 12E is a diagram illustrating an operation in which the electronic device 100 generates a 3D virtual object 1250e based on pieces of multi-modality information (e.g.,1210, 1220, 1230, and 1240) and displays the generated 3D virtual object 1250e, according to one or more embodiments of the disclosure.

The embodiment of the disclosure illustrated in FIG. 12E is the same as the embodiment of the disclosure illustrated in FIG. 12D except for a gesture input 1230 from the user drawing a rectangular top plate and four legs, and thus, descriptions already provided above are omitted.

Referring to FIG. 12E, the electronic device 100 may generate the 3D virtual object 1250e by inputting, to the generative Al model (146 of FIGS. 1 and 3), a mixture of the pieces of multi-modality information including a spatial image 1210, a voice input 1220, the gesture input 1230, and a 2D guide image 1240 and performing inferencing on the mixture thereof. In the embodiment of the disclosure illustrated in FIG. 12E, the 3D virtual object 1250c may be a 3D graphic of a desk having a shape (e.g., a shape having a rectangular top plate with angled corners and four legs) and a color (e.g., brown) that match the tone, theme, or atmosphere of a real-world space 1200e (e.g., office). The electronic device 100 may display the generated 3D virtual object 1250e by overlaying the 3D virtual object 1250e on the real-world space 1200e.

In the embodiments of the disclosure illustrated in FIGS. 12A to 12E, the electronic device 100 may modify each of the 3D virtual objects 1250a, 1250b, 1250c, 1250d, and 1250e based on receiving a user input for adjusting weights respectively applied to pieces of multi-modality information or for changing at least one of the shape, size, location, color, type, or theme of the object.

According to an aspect of the disclosure, the electronic device 100 for generating a virtual object based on multi-modality information is provided. According to one or more embodiments of the disclosure, the electronic device 100 may include the camera 110 configured to obtain an image, the memory 140 storing at least one instruction, and at least one processor 130 configured to execute the at least one instruction. The at least one processor 130 may be configured to obtain spatial information about a real-world space based on the image obtained through the camera 110. The at least one processor 130 may be configured to obtain user inputs based on the image obtained through the camera 110. The at least one processor 130 may be configured to obtain pieces of object characteristic information from the obtained user inputs. The at least one processor 130 may be configured to obtain object generation information for generating the virtual object, based on the obtained spatial information and pieces of object characteristic information. The at least one processor 130 may be configured to generate the virtual object for the obtained object generation information by inputting the object generation information to a generative Al model trained to generate a 3D virtual object based on information about a space and an object.

In one or more embodiments of the disclosure, the camera 110 may include the first camera 112 configured to obtain a spatial image of the real-world space by capturing an image of the real-world space. The at least one processor 130 may be configured to obtain the spatial information regarding at least one of a type, a category, a color, a theme, or an atmosphere of the real-world space from the spatial image obtained through the first camera 112.

In one or more embodiments of the disclosure, the camera 110 may include the second camera 114 configured to obtain a hand image by capturing an image of a user's hand. The at least one processor 130 may be configured to recognize a gesture input from the user in the hand image obtained through the second camera 114, and extract object characteristic information regarding at least one of a shape, a location, or a size of the object from the recognized user's gesture input.

In one or more embodiments of the disclosure, the second camera 114 may be configured as a depth camera including at least one of a ToF camera, a stereo vision camera, or a LiDAR sensor, and obtain a depth image by capturing an image of the user's hand. The at least one processor 130 may be configured to recognize the gesture input from the user in the depth image obtained through the second camera 114.

In one or more embodiments of the disclosure, the electronic device 100 may further include a touch screen for receiving a touch input from the user. The at least one processor 130 may be configured to recognize the gesture input from the touch input received through the touch screen, and extract, from the recognized gesture input, the object characteristic information regarding at least one of the shape, location, or size of the object.

In one or more embodiments of the disclosure, the electronic device 100 may further include the microphone 120 for receiving a voice input from the user. The at least one processor 130 may be configured to obtain a speech signal from the voice input received through the microphone 120. The at least one processor 130 may be configured to convert the speech signal into text, and obtain object characteristic information including at least one of a type, a shape, a color, or a theme of the object by analyzing the text by using an NLU model.

In one or more embodiments of the disclosure, the at least one processor 130 may be configured to obtain a 2D guide image and extract object characteristic information including at least one of a type, a shape, a color, or a theme of the object from the 2D guide image.

In one or more embodiments of the disclosure, the at least one processor 130 may be configured to convert the spatial information into first feature data by performing vector embedding on the spatial information. The at least one processor 130 may be configured to convert the object characteristic information into second feature data by performing vector embedding on the object characteristic information obtained from the gesture input. The at least one processor 130 may be configured to convert the object characteristic information into third feature data by performing vector embedding on the object characteristic information obtained from the voice input. The at least one processor 130 may be configured to convert the object characteristic information into fourth feature data by performing vector embedding on the object characteristic information obtained from the 2D guide image. The at least one processor 130 may be configured to obtain feature data representing the object generation information based on the first to fourth feature data.

In one or more embodiments of the disclosure, the at least one processor 130 may be configured to, when a vector value representing the spatial information or the object characteristic information is missing from a feature vector including the first to fourth feature data, assign a randomly generated random value as the missing vector value.

In one or more embodiments of the disclosure, the at least one processor 130 may be configured to modify the object generation information based on a user input.

In one or more embodiments of the disclosure, the at least one processor 130 may be configured to modify the object generation information by adjusting, based on the user input, a weight value assigned to each of the spatial information obtained from the spatial image, the object characteristic information obtained from the gesture input, the object characteristic information obtained from the voice input, and the object characteristic information obtained from the 2D guide image.

In one or more embodiments of the disclosure, the at least one processor 130 may be configured to modify, based on the user input, the object generation information by changing at least one of the shape, size, location, color, type, or theme.

According to another aspect of the disclosure, a method, performed by the electronic device 100, of generating a virtual object based on multi-modality information is provided. In one or more embodiments of the disclosure, the method performed by the electronic device 100 may include obtaining an image through the camera 110 (S210). The method performed by the electronic device 100 may include obtaining user inputs based on the image obtained through the camera 110 (S220). The method performed by the electronic device 100 may include obtaining spatial information about a real-world space based on the obtained image (S230). The method performed by the electronic device 100 may include obtaining pieces of object characteristic information from the obtained user inputs (S240). The method performed by the electronic device 100 may include obtaining object generation information for generating the virtual object, based on the obtained spatial information and pieces of object characteristic information. The method performed by the electronic device 100 may include generating the virtual object for the obtained object generation information by inputting the object generation information to a generative Al model trained to generate a 3D virtual object based on information about a space and an object.

In one or more embodiments of the disclosure, the obtaining of the spatial information (S230) may include obtaining a spatial image by using the first camera 112 configured to obtain a spatial image of the real-world space by capturing an image of the real-world space, and obtaining the spatial information regarding at least one of a type, a category, a color, a theme, or an atmosphere of the real-world space from the obtained spatial image.

In one or more embodiments of the disclosure, the obtaining of the pieces of object characteristic information (S240) may include obtaining a hand image through the second camera 114 configured to obtain the hand image by capturing an image of a user's hand, and recognizing a gesture input from the user in the obtained hand image. The obtaining of the pieces of object characteristic information (S240) may include extracting object characteristic information regarding at least one of a shape, a location, or a size of the object from the recognized gesture input.

In one or more embodiments of the disclosure, the second camera 114 may be configured as a depth camera including at least one of a ToF camera, a stereo vision camera, or a LiDAR sensor. In the obtaining of the hand image, the electronic device 100 may obtain a depth image by capturing an image of the user's hand. In the recognizing of the gesture input from the user, the electronic device 100 may recognize the gesture input from the user in the depth image obtained through the second camera 114.

In one or more embodiments of the disclosure, the obtaining of the object characteristic information (S240) may include receiving a touch input from the user through a touch screen, and recognizing the gesture input from the touch input received through the touch screen. The obtaining of the pieces of object characteristic information (S240) may include extracting object characteristic information regarding at least one of the shape, the location, or the size of the object from the recognized user's gesture input.

In one or more embodiments of the disclosure, the obtaining of the pieces of object characteristic information (S240) may include receiving a voice input from the user through the microphone 120, obtaining a speech signal from the received voice input, and converting the speech signal into text. The obtaining of the pieces of object characteristic information (S240) may include obtaining object characteristic information including at least one of a type, a shape, a color, or a theme of the object by analyzing the text by using an NLU model.

In one or more embodiments of the disclosure, the method performed by the electronic device 100 may further include obtaining a 2D guide image. The obtaining of the pieces of object characteristic information (S240) may include extracting object characteristic information including at least one of a type, a shape, a color, or a theme of the object from the 2D guide image.

In one or more embodiments of the disclosure, the obtaining of the pieces of object characteristic information (S240) may include converting the spatial information into first feature data by performing vector embedding on the spatial information. The obtaining of the pieces of object characteristic information (S240) may include converting the object characteristic information into second feature data by performing vector embedding on the object characteristic information obtained from the gesture input. The obtaining of the pieces of object characteristic information (S240) may include converting the object characteristic information into third feature data by performing vector embedding on the object characteristic information obtained from the voice input. The obtaining of the pieces of object characteristic information (S240) may include converting the object characteristic information into fourth feature data by performing vector embedding on the object characteristic information obtained from the 2D guide image. The obtaining of the object generation information (S250) may include obtaining feature data representing the object generation information based on the first to fourth feature data.

In one or more embodiments of the disclosure, the method performed by the electronic device 100 may further include receiving a user input for modifying the object generation information (S810), and modifying the object generation information based on the received user input (S820).

In one or more embodiments of the disclosure, in the modifying of the object generation information (S820), the electronic device 100 may modify the object generation information by adjusting, based on the user input, a weight value assigned to each of the spatial information obtained from the spatial image, the object characteristic information obtained from the gesture input, the object characteristic information obtained from the voice input, and the object characteristic information obtained from the 2D guide image.

In one or more embodiments of the disclosure, in the modifying of the object generation information (S820), the electronic device 100 may modify, based on the user input, the object generation information by changing at least one of the shape, size, location, color, type, or theme.

According to another aspect of the disclosure, a computer program product including a computer-readable storage medium is provided. The computer-readable storage medium may include instructions that are readable by the electronic device 100 to obtain an image through the camera 110, obtain user inputs based on the image obtained through the camera 110, obtain spatial information about a real-world space based on the obtained image, obtain pieces of object characteristic information from the obtained user inputs, obtain object generation information for generating a virtual object, based on the obtained spatial information and pieces of object characteristic information, and generate a virtual object for the obtained object generation information by inputting the object generation information to a generative Al model trained to generate a 3D virtual object based on information about a space and an object.

A program executed by the electronic device 100 described in the disclosure may be implemented as a hardware component, a software component, and/or a combination of the hardware component and the software component. The program may be executed by any system capable of executing computer-readable instructions.

Software may include a computer program, a piece of code, an instruction, or a combination of one or more thereof, and configure a processing device to operate as desired or instruct the processing device independently or collectively.

The software may be implemented as a computer program including instructions stored in computer-readable storage media. Examples of the computer-readable recording media include magnetic storage media (e.g., ROM, RAM, floppy disks, hard disks, etc.), optical recording media (e.g., compact disc ROM (CD-ROM), a digital versatile disc (DVD), etc.), etc. The computer-readable recording media may be distributed over computer systems connected through a network so that computer-readable code may be stored and executed in a distributed manner. The media may be read by a computer, stored in a memory, and executed by a processor.

A computer-readable storage medium may be provided in the form of a non-transitory storage medium. In this regard, the term 'non-transitory' only means that the storage medium does not include a signal and is a tangible device, and the term does not differentiate between where data is semi-permanently stored in the storage medium and where the data is temporarily stored in the storage medium. For example, the 'non-transitory storage medium' may include a buffer in which data is temporarily stored.

Furthermore, programs according to embodiments of the disclosure in the present specification may be included in a computer program product when provided. The computer program product may be traded, as a product, between a seller and a buyer.

The computer program product may include a software program and a computer-readable storage medium having stored thereon the software program. For example, the computer program product may include a product (e.g., a downloadable application) in the form of a software program electronically distributed by a manufacturer of the electronic device 100 or through an electronic market (e.g., Samsung Galaxy Store^{™}). For such electronic distribution, at least a part of the software program may be stored in the storage medium or may be temporarily generated. In this case, the storage medium may be a storage medium of a server of a manufacturer of the electronic device 100, a server of the electronic market, or a relay server for temporarily storing the software program.

In a system consisting of the electronic device 100 and/or a server, the computer program product may include a storage medium of the server or a storage medium of the electronic device 100. Alternatively, in a case where there is a third device (e.g., a wearable device) communicatively connected to the electronic device 100, the computer program product may include a storage medium of the third device. Alternatively, the computer program product may include a software program itself that is transmitted from the electronic device 100 to the third device or that is transmitted from the third device to the electronic device 100.

In this case, one of the electronic device 100 and the third device may execute the computer program product to perform methods according to embodiments of the disclosure. Alternatively, at least one of the electronic device 100 or the third device may execute the computer program product to perform the methods according to the embodiments of the disclosure in a distributed manner.

For example, the electronic device 100 may execute the computer program product stored in the memory (140 of FIG. 3) to control the another electronic device (e.g., a wearable device) communicatively connected to the electronic device 100 to perform the methods according to the embodiments of the disclosure.

In another example, the third device may execute the computer program product to control an electronic device communicatively connected to the third device to perform a method according to one or more embodiments of the disclosure.

In a case where the third device executes the computer program product, the third device may download the computer program product from the electronic device 100 and execute the downloaded computer program product. Alternatively, the third device may execute the computer program product that is pre-loaded therein to perform the methods according to the embodiments of the disclosure.

While the embodiments of the disclosure have been described above with reference to limited examples and figures, it will be understood by those of ordinary skill in the art that various modifications and changes in form and details may be made from the above descriptions. For example, adequate effects may be achieved even when the above techniques are performed in a different order than that described above, and/or the aforementioned components such as computer systems or modules are coupled or combined in different forms and modes than those described above or are replaced or supplemented by other components or their equivalents.

## Claims

1. An electronic device comprising:
a display;
a camera configured to obtain an image;
a memory storing at least one instruction; and
at least one processor configured to execute the at least one instruction to cause the electronic device to:
obtain spatial information about a real-world space based on the image obtained through the camera;
obtain user inputs based on the image obtained through the camera;
obtain object characteristic information from the user inputs;
obtain object generation information for generating a virtual object, based on the spatial information and the object characteristic information;
generate the virtual object for the object generation information by inputting the object generation information to a generative artificial intelligence (AI) model trained to generate a three-dimensional (3D) virtual object based on information about a space and an object; and
control the display to display the virtual object.

2. The electronic device of claim 1,
wherein the camera comprises a first camera configured to obtain a spatial image of the real-world space by capturing an image of the real-world space, and
wherein the at least one processor is further configured to execute the at least one instruction to cause the electronic device to:
obtain the spatial information regarding at least one of a type, a category, a color, a theme, or an atmosphere of the real-world space from the spatial image obtained through the first camera.

3. The electronic device of claim 1,
wherein the camera comprises a second camera configured to obtain a hand image by capturing an image of a hand of a user, and
wherein the at least one processor is further configured to execute the at least one instruction to cause the electronic device to:
recognize a gesture input from the user in the hand image obtained through the second camera; and
extract the object characteristic information regarding at least one of a shape, a location, or a size of the object from the gesture input.

4. The electronic device of claim 3,
wherein the second camera is configured as a depth camera comprising at least one of a time-of-flight (ToF) camera, a stereo vision camera, or a light detection and ranging (LiDAR) sensor, and is configured to obtain a depth image by capturing the image of the hand of the user, and
wherein the at least one processor is further configured to execute the at least one instruction to cause the electronic device to:
recognize the gesture input from the user in the depth image obtained through the second camera.

5. The electronic device of claim 1, further comprising:
a touch screen configured to receive a touch input from a user,
wherein the at least one processor is further configured to execute the at least one instruction to cause the electronic device to:
recognize a gesture input from the touch input received through the touch screen; and
extract the object characteristic information regarding at least one of a shape, a location, or a size of the object from the gesture input.

6. The electronic device of claim 1, further comprising:
a microphone configured to receive a voice input from a user,
wherein the at least one processor is further configured to execute the at least one instruction to cause the electronic device to:
obtain a speech signal from the voice input received through the microphone;
convert the speech signal into text; and
extract the object characteristic information comprising at least one of a type, a shape, a color, or a theme of the object by analyzing the text using a natural language understanding (NLU) model.

7. The electronic device of claim 1, wherein the at least one processor is further configured to execute the at least one instruction to cause the electronic device to:
obtain a two-dimensional (2D) guide image; and
extract the object characteristic information comprising at least one of a type, a shape, a color, or a theme of the object from the 2D guide image.

8. The electronic device of claim 1, wherein the object characteristic information comprises at least one of first object characteristic information obtained from spatial information, second object characteristic information obtained from a gesture input, third characteristic information obtained from a voice input, or fourth characteristic information obtained from 2D guide image,
wherein the at least one processor is further configured to execute the at least one instruction to cause the electronic device to:
convert the first object characteristic information into first feature data by performing vector embedding on the spatial information;
convert the second object characteristic information into second feature data by performing vector embedding on the second object characteristic information obtained from the gesture input;
convert the third object characteristic information into third feature data by performing vector embedding on the third object characteristic information obtained from the voice input,
convert the fourth object characteristic information into fourth feature data by performing vector embedding on the fourth object characteristic information obtained from the 2D guide image; and
obtain feature data representing the object generation information based on the first to fourth feature data.

9. The electronic device of claim 8, wherein the at least one processor is further configured to execute the at least one instruction to cause the electronic device to:
modify the object generation information based on the user inputs.

10. The electronic device of claim 9, wherein the at least one processor is further configured to execute the at least one instruction to cause the electronic device to:
modify the object generation information by adjusting, based on the user inputs, a weight value assigned to each of the first object characteristic information, the second object characteristic information extracted from the gesture input, the third object characteristic information obtained from the voice input, and the fourth object characteristic information obtained from the 2D guide image.

11. A method, performed by an electronic device, of generating a virtual object, the method comprising:
obtaining an image through a camera;
obtaining user inputs based on the image obtained via through the camera;
obtaining spatial information about a real-world space based on the image;
obtaining object characteristic information from the user inputs;
obtaining object generation information for generating the virtual object, based on the spatial information and the object characteristic information;
generating the virtual object for the object generation information by inputting the object generation information to a generative artificial intelligence (AI) model trained to generate a three-dimensional (3D) virtual object based on information about a space and an object; and
displaying, with a display, the virtual object.

12. The method of claim 11, wherein the object characteristic information comprises at least one of first object characteristic information obtained from spatial information, second object characteristic information obtained from a gesture input, third characteristic information obtained from a voice input, or fourth characteristic information obtained from 2D guide image, and
wherein the generating of the object generation information comprises:
converting the first object characteristic information into first feature data by performing vector embedding on the spatial information;
converting the second object characteristic information into second feature data by performing vector embedding on the second object characteristic information obtained from the gesture input;
converting the third object characteristic information into third feature data by performing vector embedding on the third object characteristic information obtained from the voice input;
converting the fourth object characteristic information into fourth feature data by performing vector embedding on the fourth object characteristic information obtained from the 2D guide image; and
obtaining feature data representing the object generation information based on the first to fourth feature data.

13. The method of claim 12, further comprising:
receiving the user inputs for modifying the object generation information; and
modifying the object generation information based on the user inputs.

14. The method of claim 13, wherein the modifying of the object generation information comprises modifying the object generation information by adjusting, based on the user inputs, a weight value assigned to each of the first object characteristic information, the second object characteristic information obtained from the gesture input, the third object characteristic information obtained from the voice input, and the fourth object characteristic information obtained from the 2D guide image.

15. A computer program product comprising a computer-readable storage medium, wherein the computer-readable storage medium comprises instructions that are readable by an electronic device to:
obtain an image through a camera;
obtain user inputs based on the image obtained through the camera;
obtain spatial information about a real-world space based on the image;
obtain object characteristic information from the user inputs;
obtain object generation information for generating a virtual object, based on the spatial information and the object characteristic information;
generate the virtual object for the object generation information by inputting the object generation information to a generative artificial intelligence (Al) model trained to generate a three-dimensional (3D) virtual object based on information about a space and an object; and
display, with a display, the virtual object.
